# EUROPEAN PATENT APPLICATION

(11) **EP 1 582 993 A2**
(43) Date of publication of application: **05.10.2005**
(21) Application number: 05005182.0
(22) Date of filing: 09.03.2005
(51) Int. Cl.: G06F 17/21

(54) **Apparatus, program and storage medium for editing printing data**

(30) Priority: 31.03.2004 JP 2004103895
(71) Applicant: Brother Kogyo Kabushiki Kaisha, Aichi-ken 467-8561 (JP)
(72) Inventor: Tanaka, Motonori Brother Kogyo Kabushiki Kaisha, Mizuho-ku Nagoya-shi Aichi-ken 467-8562 (JP); Iwanaga, Kazuhiko Brother Kogyo Kabushiki Kaisha, Mizuho-ku Nagoya-shi Aichi-ken 467-8562 (JP); Fujita, Yasuyuki Brother Kogyo Kabushiki Kaisha, Mizuho-ku Nagoya-shi Aichi-ken 467-8562 (JP); Nose, Tetsuya Brother Kogyo Kabushiki Kaisha, Mizuho-ku Nagoya-shi Aichi-ken 467-8562 (JP)
(74) Representative: Hofer, Dorothea

(57) **Abstract**

A printing data editing apparatus includes a first memory that stores decoration information that includes decoration contents for a plurality of decoration items to be made to at least one object to be printed as group decoration information, wherein the group decoration information comprises at least one piece of the decoration information and is assigned with relative levels; and a controller that is capable of: designating a level of the group decoration information that includes the at least one piece of the decoration information stored in the first memory; and decorating the plurality of decoration items based on decoration contents of each decoration item at a designated level.

## Description

### BACKGROUND

The disclosure relates to a printing data editing apparatus and a printing data editing program stored on a computer-readable storage medium.

Conventionally, when printing data to be printed by a printer is edited, objects such as text data and image data are decorated by setting decoration items for each of a selected one or a plurality of objects. Further, conventionally, in a word processor equipped with a display and dot printing mechanism, formats such as character fonts and underlinings are set for each document or each character. However, since only one kind of format is settable for only one document, a format setting has to be repeated when it is desired to print the same document in different formats, and the operation becomes cumbersome. Japanese Laid-Open Patent Publication No. HEI 5-177900 proposes a printer in which a plurality of formats are registered beforehand, and one of the formats is selected for each document.

However, at the time of editing printing data, if a decoration is set for each object when various decoration settings are attempted in order to obtain a combination of desired decorations, it is necessary to repeat an operation in which a decoration setting is made for each object. After checking the result of the decorations, another decoration setting is made and the results are again checked. However, this is more burdensome. In addition, it is also burdensome to repeat such an operation for each object and to select a plurality of objects. Further, if the decoration settings are repeated, it is impossible to display the results of the decorations in a state where various decorations results are placed next to each other for comparison. Therefore, in order to compare the decoration results to select an optimum combination, printing is performed each time a decoration result is obtained so as to obtain the printing result. This operation has problems in that it wastes printed media and printing media, or takes too much time.

Further, in the printer described in Japanese Laid-Open Patent Publication No. HEI 5-177900, format setting is made for the entire document, but the objects are characters (texts) only. However, in recent years, image data is frequently treated as objects in addition to characters. In addition, a plurality of objects are grouped or decorations are made for the entire document. In addition, more complicated and a variety of decorations have come to be made for texts. In such situations, there is a demand for formats which are to be registered beforehand having more detail and a variety of settings.

### SUMMARY OF THE INVENTION

An object of the invention is to provide a printing data editing apparatus which, among other things, facilitates an operation of decorating objects, and a printing data editing program stored on a computer-readable storage medium.

The object is solved by the provision of a printing data editing apparatus according to claim 1 and a printing data editing program stored on a computer-readable storage medium according to claim 15, respectively. Preferred embodiments of the printing data editing apparatus according to the present invention are set forth in the subclaims of claim 1, and of the printing data editing program stored on a computer-readable storage medium according to the present invention are set forth in the subclaims of claim 15.

According to a first aspect of the invention, a printing data editing apparatus includes a first memory that stores decoration information that includes decoration contents for a plurality of decoration items to be made to at least one object to be printed as group decoration information, wherein the group decoration information comprises at least one piece of the decoration information and is assigned with relative levels; and a controller for: designating a level of the group decoration information that includes the at least one piece of the decoration information stored in the first memory; and decorating the plurality of decoration items based on decoration contents of each decoration item at a designated level.

Further, according to a second aspect of the invention, a printing data editing program stored on a computer-readable storage medium, includes a routine that stores, in a first memory, decoration information that includes decoration contents for a plurality of decoration items to be made to at least one object to be printed as group decoration information, wherein the group decoration information comprises at least one piece of the decoration information and is assigned with relative levels; a routine that designates a level of the group decoration information that includes the at least one piece of the decoration information stored in a first memory; and a routine that decorates the plurality of decoration items based on decoration contents of each decoration item at a designated level.

### BRIEF DESCRIPTION OF THE DRAWINGS

Embodiments, which are presented in a non-limiting manner, will be described below in detail with reference to the accompanying drawings in which:

Fig. 1 is an appearance perspective view showing a schematic structure of a printer and a personal computer;

Fig. 2 is a block diagram showing an electric structure of the personal computer;

Fig. 3 is a schematic diagram showing a storage area of a RAM in the personal computer;

Fig. 4 is an image diagram of an editor for inputting characters to be printed by a printer;

Fig. 5 is a schematic diagram showing a schematic structure of a decoration list information storage area;

Fig. 6 is a schematic diagram showing a detailed structure of decoration contents in the decoration list information storage area;

Fig. 7 is a schematic diagram showing an other detailed structure of decoration contents in the decoration list information storage area;

Fig. 8 is a schematic diagram showing a structure of an object information storage area showing information of each object of a printing image shown in Fig. 4;

Fig. 9 is a schematic diagram showing a structure of the object information storage area after decoration;

Fig. 10 is an image diagram showing a decoration screen in a state where a decoration list is not selected;

Fig. 11 is an image diagram of the decoration screen in a state where "decorative" is selected in the decoration list and a decoration level "6" is selected;

Fig. 12 is an image diagram of the decoration screen with all the lists displayed;

Fig. 13 is an image diagram of the decoration screen with all the lists displayed together with a scroll bar;

Fig. 14 is an image diagram of a detail setting screen for decoration lists;

Fig. 15 is an image diagram of a decoration list addition and deletion screen;

Fig. 16 is a schematic diagram showing a structure of a decoration processing information storage area provided in a RAM;

Fig. 17 is a schematic diagram showing a structure of a decoration list editing information storage area provided in the RAM;

Fig. 18 is a flowchart of a decoration processing;

Fig. 19 is a flowchart of a display renewal processing to be performed in the decoration processing;

Fig. 20 is a flowchart of a display number change processing to be performed in the decoration processing;

Fig. 21 is a flowchart of a decoration lists edition processing to be performed in the decoration processing;

Fig. 22 is a flowchart of a preview renewal processing to be performed in the decoration lists editing processing;

Fig. 23 is a flowchart of a level addition processing to be performed in the decoration lists editing processing;

Fig. 24 is a flowchart of a decoration lists addition and deletion processing to be performed in the decoration lists editing processing;

Fig. 25 is a flowchart of a new list production processing to be performed in the decoration lists addition and deletion processing;

Fig. 26 is a flowchart of a name change processing to be performed in the decoration lists addition and deletion processing;

Fig. 27 is a flowchart of an import processing to be performed in the decoration lists addition and deletion processing; and

Fig. 28 is a flowchart of an export processing to be performed in the decoration lists addition and deletion processing.

### DETAILED DESCRIPTION OF EMBODIMENTS

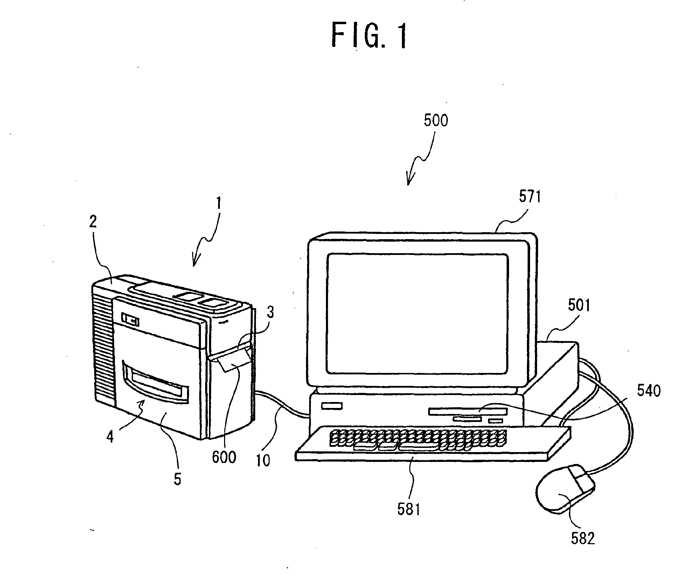

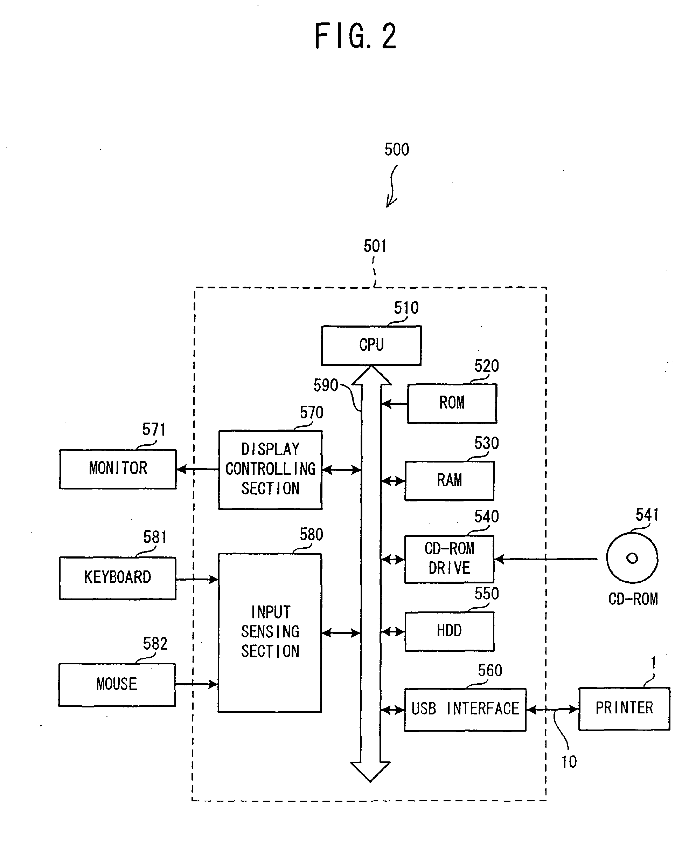

Hereinafter, embodiments will be described with reference to drawings. The description will be made by exemplifying a personal computer 500 connected to a printer 1 as a "printing data editing apparatus". The personal computer 500 carries a "printing data editing program" as set forth in the present disclosure. First of all, the printer 1 and the personal computer 500 will be described with reference to Figs. 1 and 2. Fig. 1 is an appearance perspective view showing a schematic structure of the printer 1 and the personal computer 500. Fig. 2 is a block diagram showing an electric structure of the personal computer 500.

As shown in Fig. 1, the personal computer 500 and the printer 1 are connected with each other by a USB cable 10 which is based on the USB standards and the like, and exchange data with each other via the USB cable 10. The personal computer 500 is a known-type personal computer, and as shown in Fig. 1, includes a main body 501 carrying a CPU 510 (see Fig. 2), a monitor 571, a keyboard 581, and a mouse 582. The monitor 571, the keyboard 581, and the mouse 582 are respectively connected to the main body 501 by their individual connection cables. The personal computer 500 produces printing data based on the image data which has been produced by software incorporating a printing data editing program, and transmits the produced data to the printer 1.

Further as shown in Fig. 1, the printer 1 is cased into a substantially rectangular housing 2, and its front surface (i.e. a surface on the foremost right-hand side in Fig. 1) is formed with a discharge port 3 for discharging a tape 600. Further, a tape cassette storage section 4 is formed inside the housing 2 at the left side. A tape cassette is detachably mounted to the tape cassette storage section 4 by opening a cover 5 provided at the left-hand side of the housing 2. The tape cassette storage section 4 is provided with a printing mechanism. The printing mechanism performs printing on the tape 600 while allowing the tape 600 to travel between a thermal head including a plurality of heat emitting elements and a platen roller to be in contact with the thermal head. The tape 600 in the mounted tape cassette is subjected to printing in the printing mechanism, and then is cut by a tape cutter of the printing mechanism and is discharged from the discharge port 3.

Next, an electric structure of the personal computer 500 will be described with reference to Fig. 2. As shown in Fig. 2, the personal computer 500 is provided with a CPU 510 (i.e., a controller) for controlling the personal computer 500. To the CPU 510, connected via a bus 590 are a ROM 520 for storing a program such as BIOS that the CPU 510 executes, a RAM 530 for temporarily storing data, a CD-ROM drive 540 into which a CD-ROM 541 that is a data storage medium is inserted for reading data therefrom, and a HDD 550 that is a data storage apparatus. The HDD 550 is formed with a program storage area for storing various programs to be executed in the personal computer 500 such as a printing data editing program, a program-related information storage area for storing information such as settings and initial values required for executing programs, data, a tape information storage area for storing information related to the tape to be used in the printer 1, and the like.

Further, connected via the bus 590 to the CPU 510, are a USB interface 560 for permitting communication with external devices including the printer 1, a display controlling section 570 for performing screen display processing on the monitor 571 that displays an operation screen to the user, and the keyboard 581 and the mouse 582 through which the user inputs operations. Further, an input sensing section 580 for sensing inputs from the keyboard 581 and mouse 582 is also connected to the CPU 510. The personal computer 500 may be provided with an unillustrated floppy (registered trademark) disk drive, input and output sections for sounds etc, and various interfaces.

The CD-ROM 541 holds software incorporating a printing data editing program, settings and data to be used for executing the program. When the CD-ROM 541 is loaded, the settings and data are stored into the program storage area or program-related information storage area formed in the HDD 550. The method for acquiring the printing data editing program and the use data of the personal computer 500 is not limited to that using the CD-ROM 541, but may be a method using other recording media such as a floppy (registered trademark) disk and MO. Still, the personal computer 500 may be connected to a network and such program and data may be acquired from other terminals on the network.

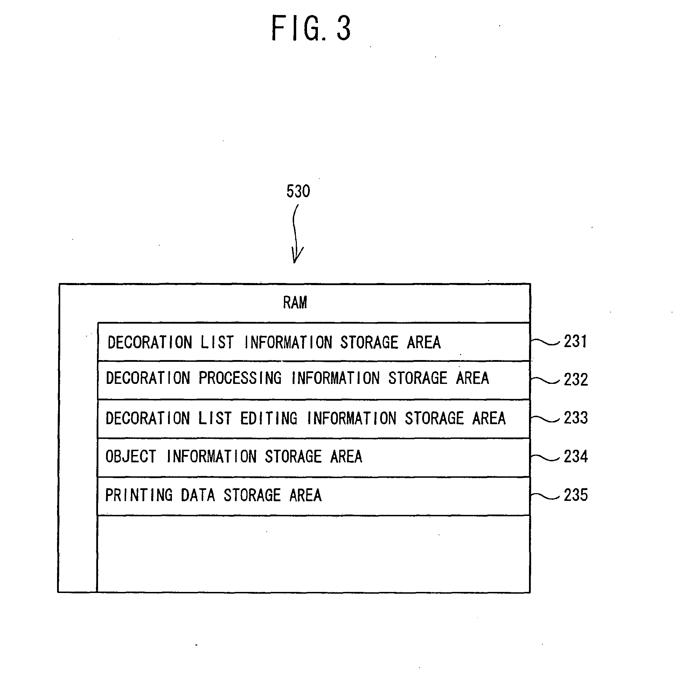

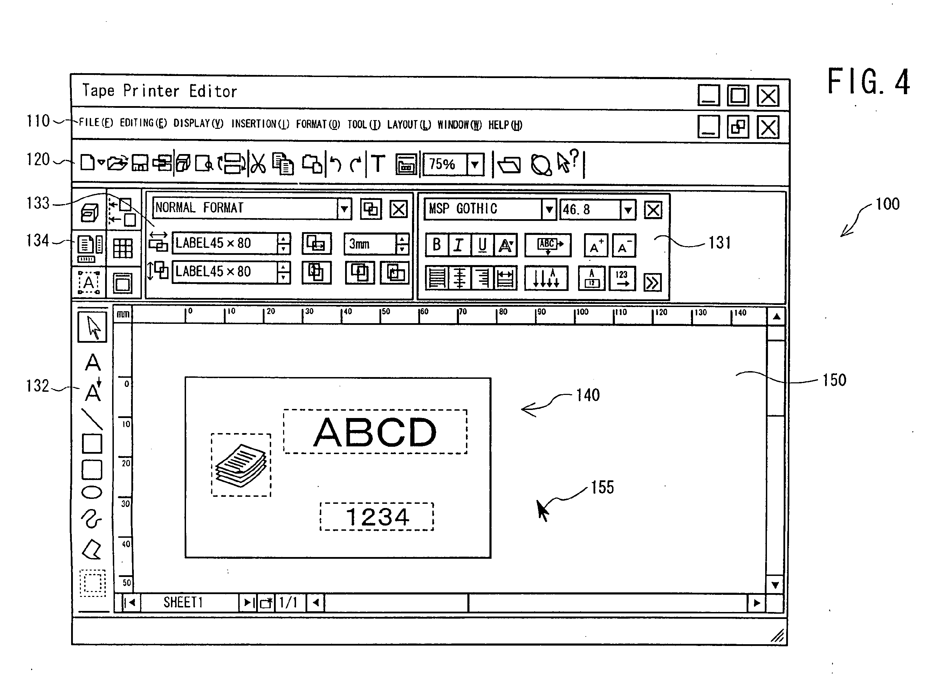

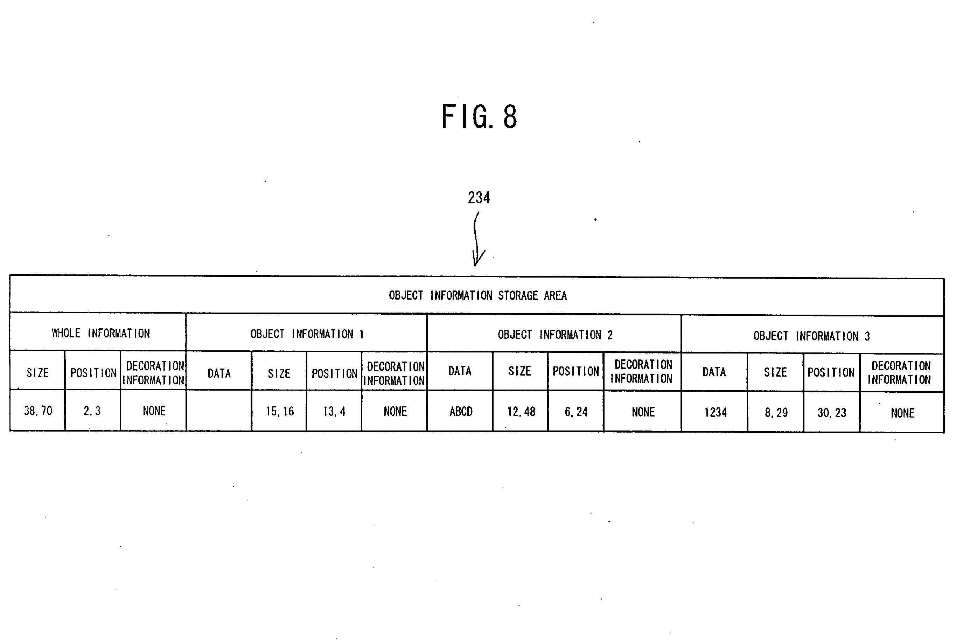

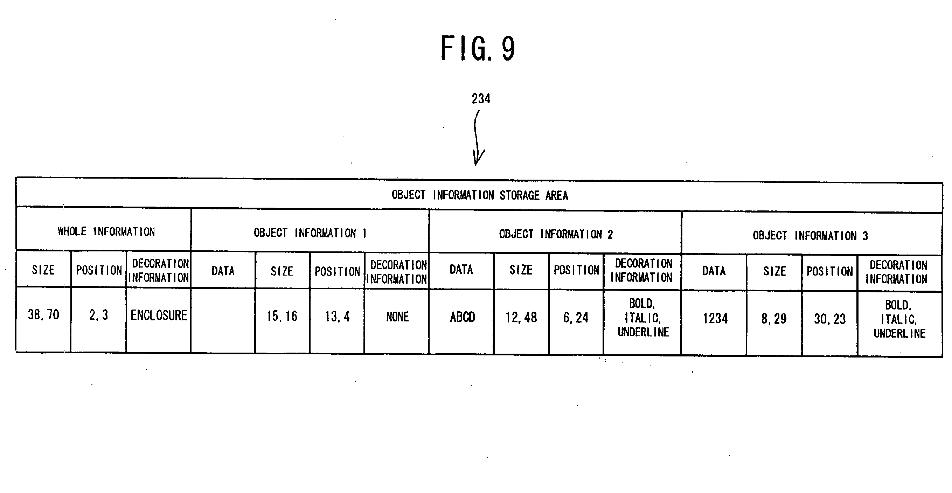

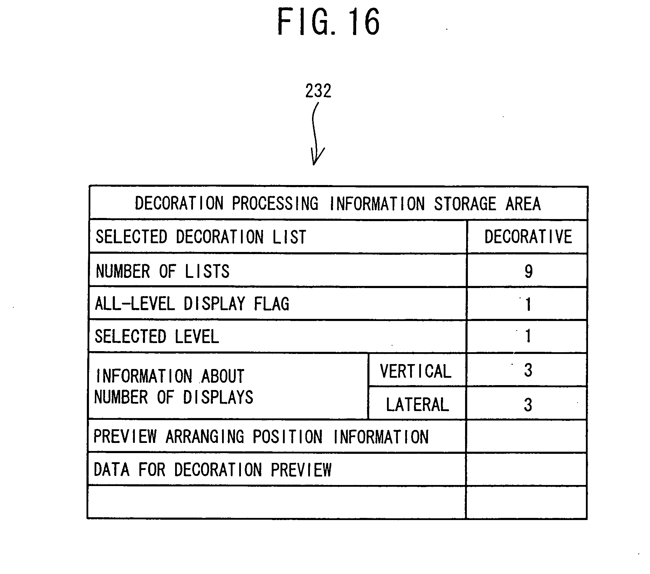

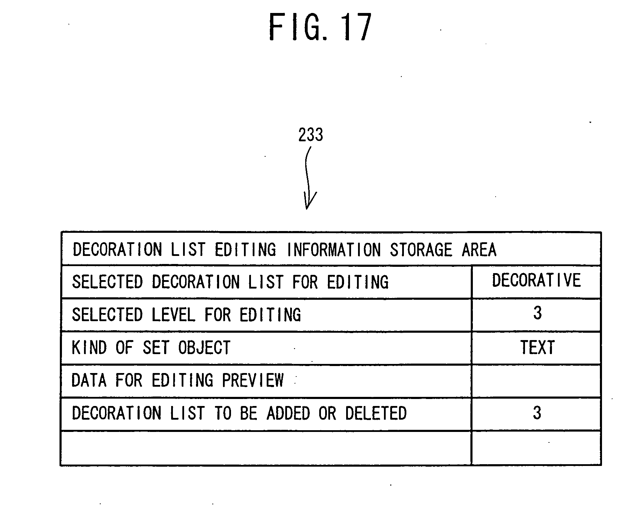

Here, the storage area of the RAM 530 in the personal computer 500 will be described with reference to Fig. 3. Fig. 3 is a schematic diagram showing a storage area of a RAM 530 in the personal computer 500. The RAM 530 is formed with a decoration list information storage area 231 for storing a decoration list for decorating all the objects at one time (see Figs. 4 to 6), a decoration processing information storage area 232 to be used for decorating objects using the decoration list (see Fig. 16), a decoration list editing information storage area 233 to be used for editing the decoration list (see Fig. 17), an object information storage area 234 that stores information about objects displayed on the operation region of an editor 100 (see Figs. 8 and 9), a printing data storage area 235 for storing printing data, and the like. The RAM 530 is further provided with unillustrated various storage areas.

Next, an editor 100 that is activated by the personal computer 500 will be described with reference to Fig. 4. Fig. 4 is an image diagram of an editor 100 for inputting characters to be printed by a printer 1. The editor 100 is displayed on the monitor 571 of the personal computer 500. Data input and instructions are given to the editor 100 by operating the keyboard 581 and the mouse 582.

As shown in Fig. 4, a menu bar 110 and a tool bar 120 for instructing operations are provided at the upper portion of the editor 100. At the lower portion of the editor 100, an operating region 150 for editing characters to be printed by the printer 1 is provided, and a printing image 140 is displayed thereon. An arrow within the operating region 150 is a mouse cursor 155. At the left side in the operating region 150, a tool box 132 for designating the kind of tool (characters, lines, squares, curves, etc) to be input in the operating region 150 is provided. At the upper portion of the operating region 150, a tool box 131 for text property to be used for setting details of character input into the operating region 150, a tool box 133 for page property and for selecting and setting label tapes and sealing tapes, and a group of buttons 134 for instructing to display/non-display various tool boxes are provided. By operating thus-structured editor 100 through the keyboard 581 or mouse 582, information to be printed by the printer 1 can be edited.

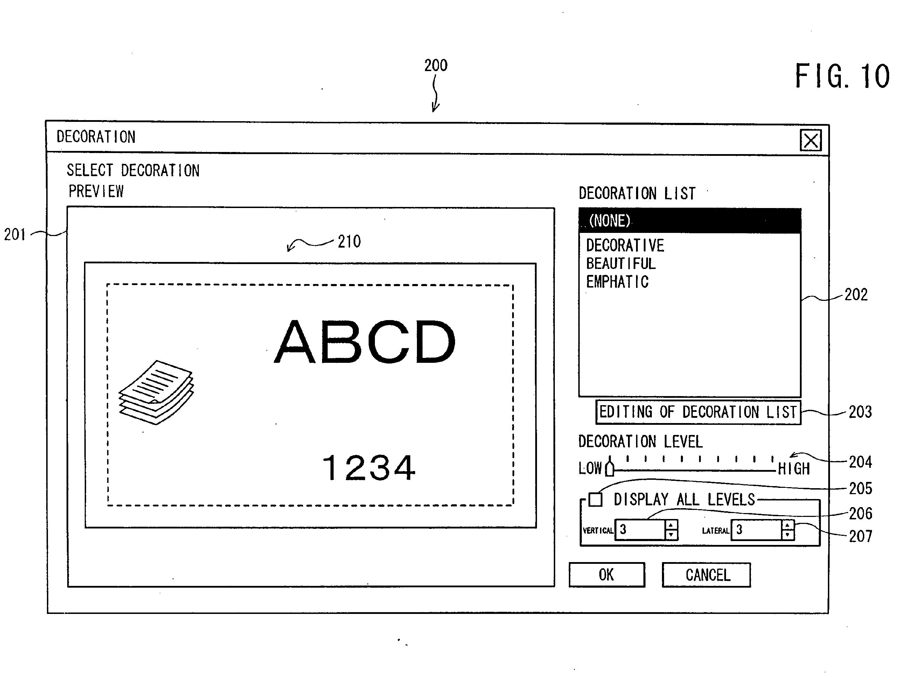

In the printing data editing program, it is possible to decorate all the characters and graphic forms input by the editor 100 at one time. The information relating to these decorations is stored in the decoration list information storage area 231 of the RAM 530 as a decoration list. When "decoration" is instructed in the editor 100, the decoration screen 200 (see Fig. 10) is displayed on the monitor 571. By selecting a decoration list and a decoration level, each object displayed on the operating region 150 can be decorated.

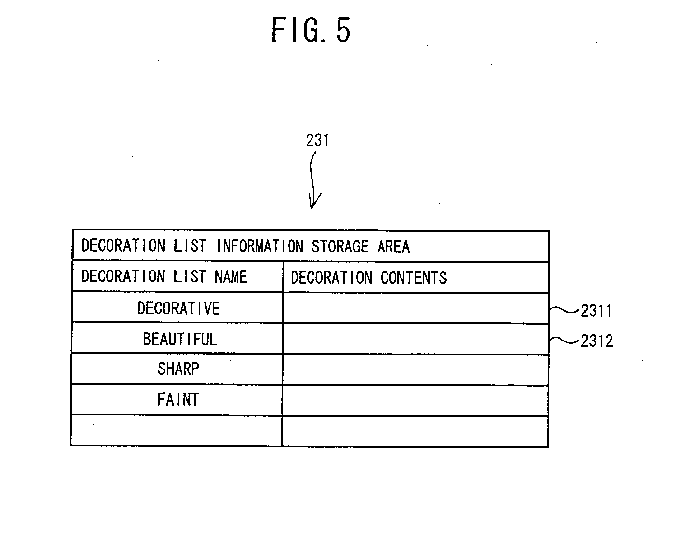

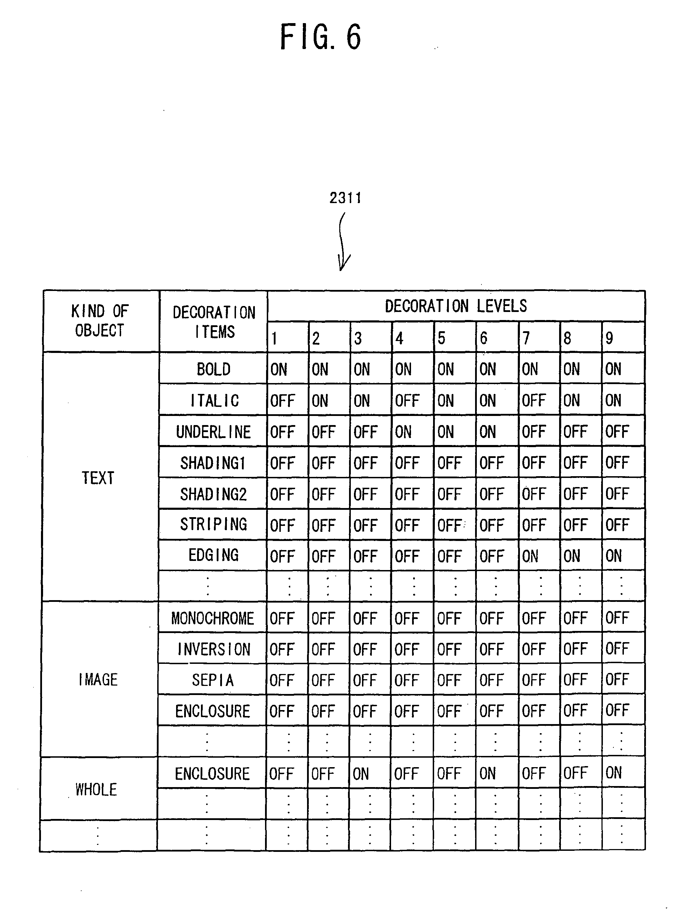

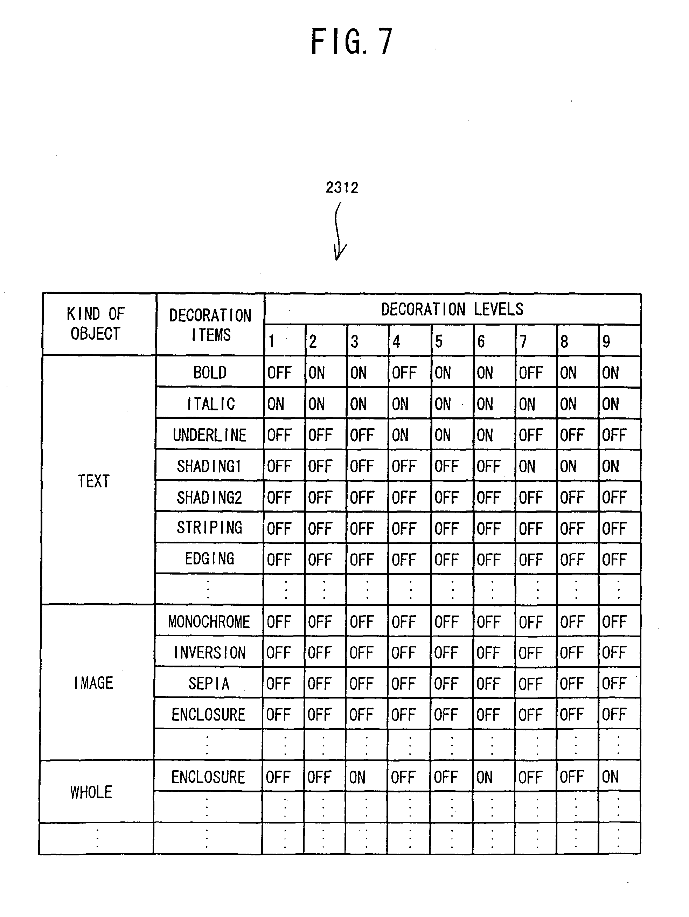

Here, the decoration list information storage area 231 will be described with reference to Figs. 5 to 7. The decoration list information storage area 231 stores decoration information that includes decoration contents for a plurality of decoration items to be made to at least one object to be printed as group decoration information, wherein the group decoration information comprises at least one piece of the decoration information and is assigned with relative levels. Fig. 5 is a schematic diagram showing a schematic structure of a decoration list information storage area 231. Fig. 6 is a schematic diagram showing a detailed structure of decoration contents 2311 in the decoration list information storage area 231. Fig. 7 is a schematic diagram showing another detailed structure of decoration contents 2312 in the decoration list information storage area 231.

As shown in Fig. 5, the decoration list information storage area 231 is formed with a decoration contents column corresponding to a decoration list name column. The decoration list is provided with names. In an example illustrated in Fig. 5, the decoration list is provided with names expressing images such as "decorative", "beautiful", "sharp", and "faint". Then, decoration contents are defined in correspondence with the respective names in the decoration list. As shown in Figs. 6 and 7, the decoration contents include columns of decoration items which can be made for each object for each kind of object such as "text", "image", and "whole". The "text" column exemplifies "bold", "italic", "underline", "shading 1", "shading 2", "striping", and "edging". The "image" column exemplifies "monochrome", "inversion", "sepia", and "enclosure". The "whole" column exemplifies "enclosure". The "whole" indicates a region containing all the objects. The decoration list has level settings. In the decoration list named as "decorative", the decoration list can relatively have a plurality of pieces of decoration information. In this embodiment, the decoration content having a large numeric value indicative of a level is defined as a high level, and the decoration content having a small numeric value indicative of a level is defined as a low level.

In an example of the decoration content 2311 of "decorative" shown in Fig. 6, 9 levels from "1" to "9" are set. Each decoration item is set in such a manner that the degree of "decorative" increases as the numeric value of the decoration level increases. At the decoration level "1", the "bold" in the "text" is turned ON. At the decoration level "2", the "bold" and "italic" in the "text" are turned ON. At the decoration level "3", the "bold" and "italic" in the "text" as well as the "enclosure" in the "whole" are turned ON. At the decoration level "4", the "bold" and "underline" in the "text" are turned on. At the decoration level "5", the "bold", "italic", and "underline" in the "text" are turned on. At the decoration level "6", the "bold", "italic", and "underline" in the "text" as well as the "enclosure" in the "whole" are turned ON. At the decoration level "7", the "bold" and "edging" in the "text" are turned ON. At the decoration level "8", the "bold", "italic", and "edging" in the "text" are turned ON. At the decoration level "9", the "bold", "italic", and "edging" in the "text" as well as the "enclosure" in the "whole" are turned ON.

In an example of the decoration content 2312 of "beautiful" shown in Fig. 7, 9 levels from "1" to "9" are set. Each decoration item is set in such a manner that the degree of "beauty" increases as the numeric value of the decoration level increases. At the decoration level "1 ", the "italic" in the "text" is turned ON. At the decoration level "2", the "bold" and "italic" in the "text" are turned ON. At the decoration level "3", the "bold" and "italic" in the "text" as well as the "enclosure" in the "whole" are turned ON. At the decoration level "4", the "italic" and "underline" in the "text" are turned ON. At the decoration level "5", the "bold", "italic", and "underline" in the "text" are turned ON. At the decoration level "6", the "bold", "italic", and "underline" in the "text" as well as the "enclosure" in the "whole" are turned ON. At the decoration level "7", the "italic" and "shading 1" in the "text" are turned ON. At the decoration level "8", the "bold", "italic", and "shading 1" in the "text" are turned ON. At the decoration level "9", the "bold", "italic", and "shading 1" in the "text" as well as the "enclosure" in the "whole" are turned ON.

Next, an object information storage area 234 will be described with reference to Figs. 8 and 9. Information of an object produced in the operating region 150 of the editor 100 is stored in the object information storage area 234. Fig. 8 is a schematic diagram showing a structure of an object information storage area 234 showing information of each object of a printing image 140 shown in Fig. 4. Fig. 9 is a schematic diagram showing a structure of the object information storage area 234 after decoration.

As shown in Figs. 8 and 9, the object information storage area 234 stores information about a region (whole) containing each object and all the objects displayed on the operating region 150. The whole information column indicating information related to the whole is categorized into a size column, position column, and decoration information column. A size of the whole is set to the size column; a distance from the upper left point of the printing-allowed region is set to the position column; and decoration contents which are set for the whole are set to the decoration information column. The information related to an object is stored in an object information 1 column, object information 2 column, and object information 3 column, each of which is categorized into a data column, size column, position column, and decoration information column. The object information columns are present in the number identical to the number of objects formed in the operating region 150. When the object is a text object, contents of text data are set to the data column. When the object is an image object, image information of the image object are set to the data column. A size of the object is set to the size column; a distance from the upper left point of the printing-allowed region is set to the position column; and decoration contents which are set for the object are set to the decoration information column.

In an example shown in Fig. 8, the whole size is 38 in the vertical direction and 70 in the lateral direction. The position is 2 in the vertical direction and 3 in the lateral direction. No decoration information is set. Since the data in the object information 1 is image data, the data column is blank. The size is 15 in the vertical direction and 16 in the lateral direction. The position is 13 in the vertical direction and 4 in the lateral direction. No decoration information is set. Data in the object information 2 is "ABCD". The size is 12 in the vertical direction and 48 in the lateral direction. The position is 6 in the vertical direction and 24 in the lateral direction. No decoration information is set. Data in the object information 3 is "1234". The size is 8 in the vertical direction and 29 in the lateral direction. The position is 30 in the vertical direction and 23 in the lateral direction. No decoration information is set.

Further, in an example shown in Fig. 9, the data column of each object information, and the size column and position column of the whole information and each object information are the same as the example shown in Fig. 8. In the decoration information column for the whole information, an "enclosure" is set. In the decoration information columns of the object information 2 and object information 3 which indicate text objects respectively, a "bold", "italic", and "underline" are set. The decoration information column for the object information 1 which indicates an image object is left in a state where nothing is set therein.

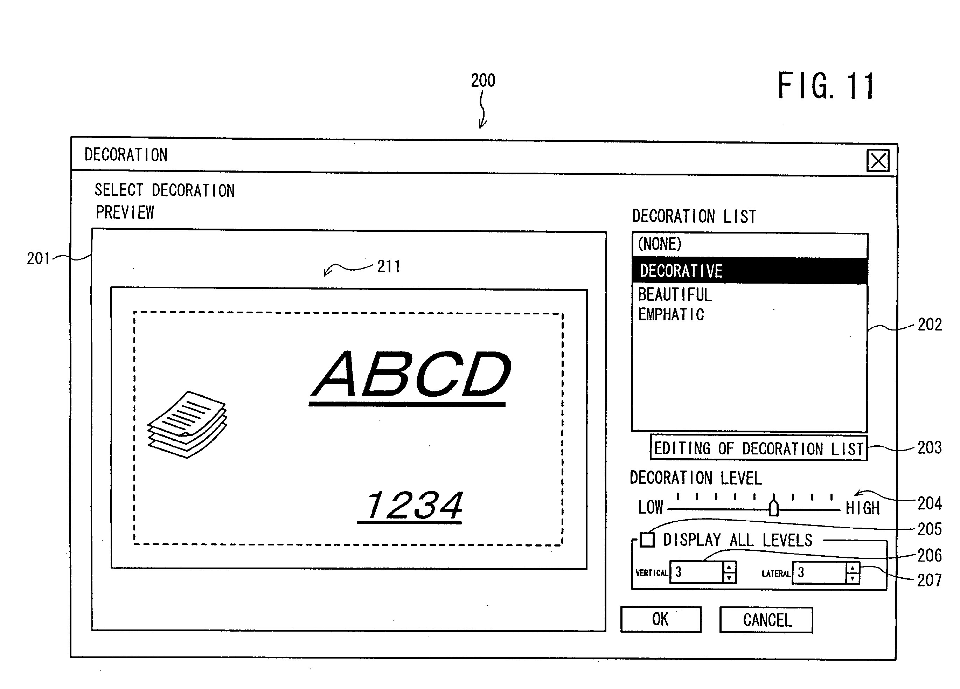

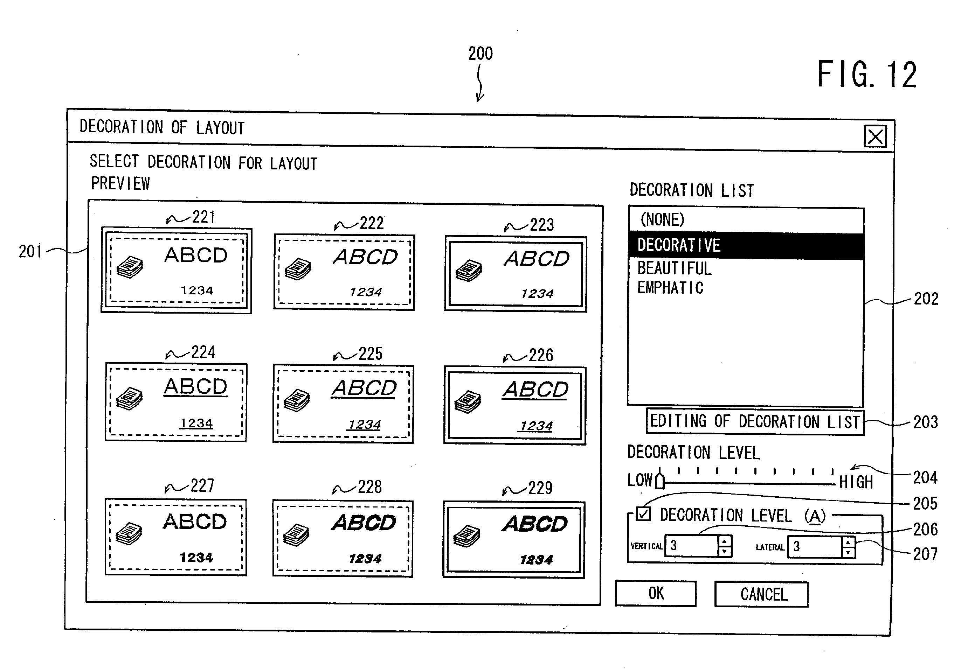

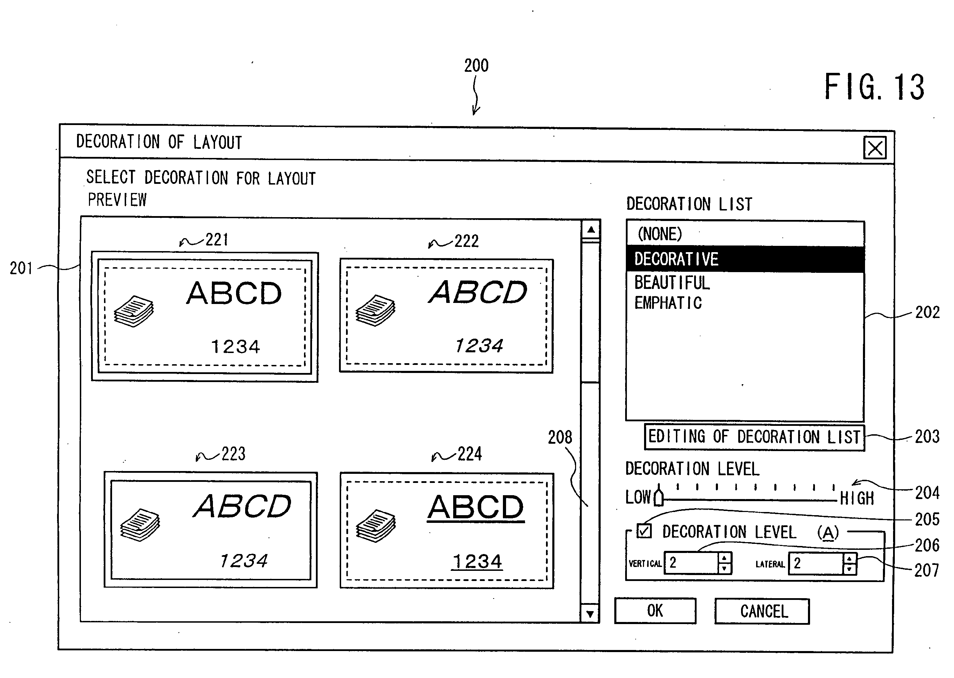

Next, a decoration screen 200 to be displayed at the time of making a decoration using the decoration lists will be described with reference to Figs. 10 to 13. The decoration screen 200 is displayed when "decoration" is instructed in the editor 100. The "decoration" is instructed by selecting "decoration" from the menu list displayed by selecting "format" in the menu bar 110, for example. Fig. 10 is an image diagram showing a decoration screen 200 in a state where a decoration list is not selected. Fig. 11 is an image diagram of the decoration screen 200 in a state where "decorative" is selected in the decoration list and a decoration level "6" is selected. Fig. 12 is an image diagram of the decoration screen 200 with all the lists displayed. Fig. 13 is an image diagram of the decoration screen 200 with all the lists displayed together with a scroll bar 208.

As shown in Figs. 10 to 13, the decoration screen 200 is formed with a preview column 201 at its left two-thirds portion. The decoration screen 200 is also formed with a decoration list column 202 that designates the group decoration information at its upper right portion, a decoration list editing button 203 below the decoration list column 202, a decoration level slider 204 that designates a level of the group decoration information that includes the at least one piece of the decoration information stored in the decoration list information storage area 231 below the decoration list editing button 203, an all-level display check box 205 below the decoration level slider 204, a vertical list box 206 and a lateral list box 207 below the all-level display check box 205, and an OK button and a cancel button below the vertical list box 206 and the lateral list box 207. A decoration list is selectable in the decoration list column 202, and a decoration level is selectable in the decoration level slider 204. Further, in the all-level display check box 205, it is possible to select whether to display on the preview column 201 a printing image decorated by the decoration information of all the levels. As shown in Figs. 10 and 11, if the all-level display check box 205 is not filled in, the preview column 201 displays the decoration images 210, 211 decorated by the decoration information selected in the decoration list column 202 and the decoration level slider 204 (selected decoration level display). In the example shown in Fig. 11, a decoration level "6" of "decorative" in the decoration list is selected. As shown in Fig. 10, when "(none)" is selected in the decoration list, an undecorated object is displayed.

Further, if the all-level display check box 205 is filled in, as shown in Figs. 12 and 13, all the decoration images at all the levels are displayed in the order of levels in the state that the number selected in the lateral list box 207 is arranged in the lateral direction of the preview column 201 whereas the number selected in the vertical list box 206 is arranged in the row direction (all-level display). The vertical list box 206 and the lateral list box 207 are controlled in such a manner as to be operable only when the all-level display check box 205 is filled in. In the example shown in Fig. 12, three images are designated in the vertical direction and three images are designated in the lateral direction, and therefore, nine decoration images 221 to 229 are displayed in total. When the number designated in the vertical list box 206 and the lateral list box 207 is smaller than the number of all the levels, as shown in Fig. 13, a scroll bar 208 is displayed at a right side of the preview column 201 and the decoration images of all the levels are displayed by scrolling. In the example shown in Fig. 13, decoration images 221 to 224 are displayed. A decoration level can be selected by selecting the printing image in the preview column 201. In both of Figs. 12 and 13, a decoration image 221 is selected.

When an OK button is selected, decoration information is reflected in the object information storage area 234. For example, as shown in Fig. 11, when a decoration level "6" is selected in the "decorative" of the decoration list, the object information storage area 234 shown in Fig. 8 is reflected in the same manner as the object information storage area 234 shown in Fig. 9.

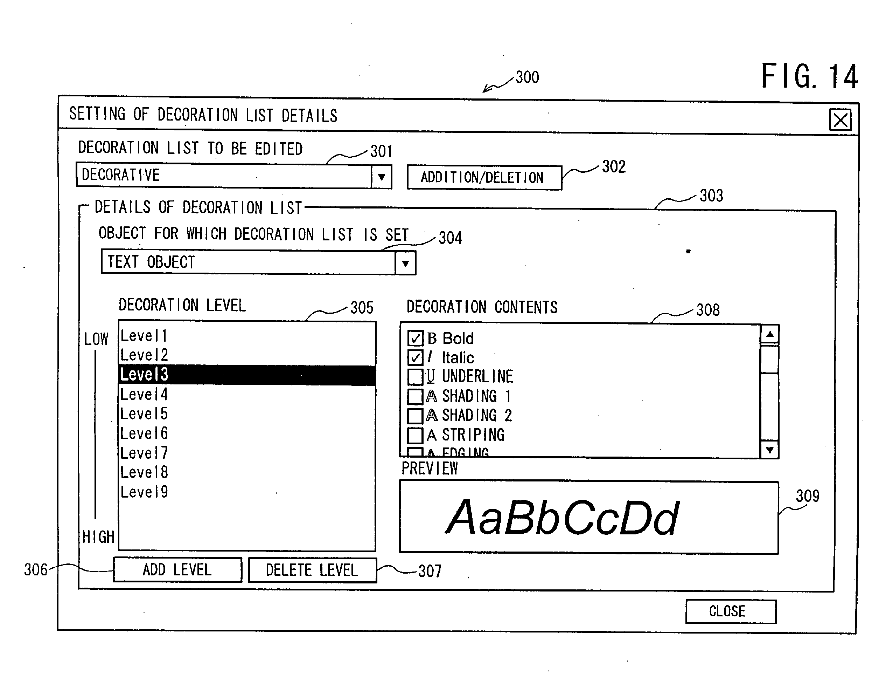

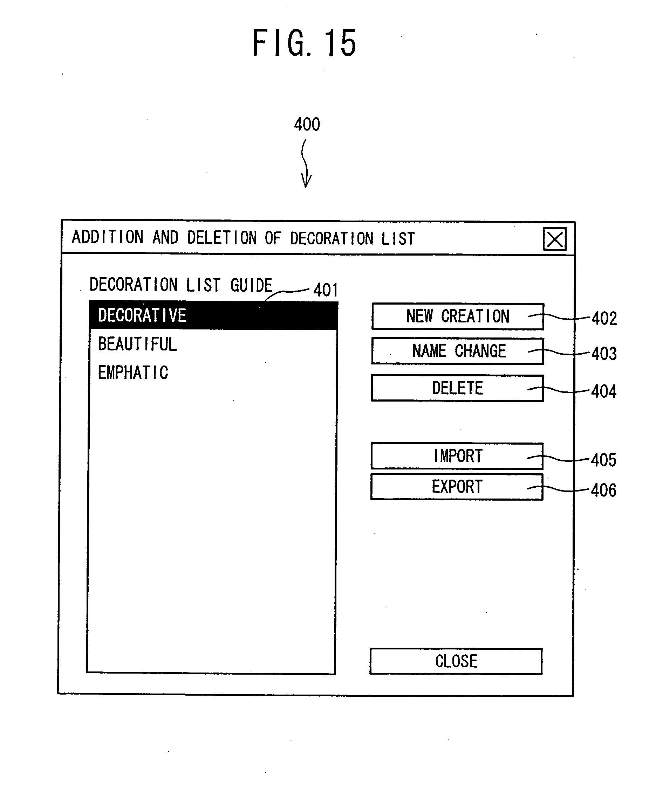

The decoration list can be edited. Here, an edit of the decoration list will be described with reference to Figs. 14 and 15. Fig. 14 is an image diagram of a detail setting screen 300 for decoration lists, and Fig. 15 is an image diagram of a decoration list addition and deletion screen 400.

The detail setting screen 300 for decoration lists is displayed when the decoration list editing button 203 on the decoration screen 200 is selected. The detail setting screen 300 is also displayed when a "decoration list edit" is instructed in the editor 100. As shown in Fig. 14, the detail setting screen 300 for the decoration lists is formed with an editing and decoration list box 301, a decoration list adding and deleting button 302, a decoration list detail column 303, and a closure button. The decoration list detail column 303 is formed with a set object list box 304, an editing and decoration level column 305, a level adding button 306, a level deleting button 307, a decoration contents column 308 that designates decoration contents of each decoration item in the decoration information included in the group decoration information, and an editing preview column 309 that displays a printing image of an object that is decorated in accordance with designated decoration contents.

In the editing and decoration list box 301, a decoration list to be edited can be selected from the decoration lists stored in the decoration list information storage area 231. The decoration list adding and deleting button 302 allows addition and deletion of a decoration list. In the set object list box 304, a kind of the object for which detailed setting of decoration is made can be selected. In the editing and decoration level column 305, the decoration level for which detailed setting of decoration is made can be selected. Further, the level adding button 306 allows addition of new level on top of the level which is already selected in the editing and decoration level column 305. The level deleting button 307 allows deletion of an already-selected level. In the editing and decoration level column 305, it is possible to select a blank column immediately below the currently-displayed level. Selecting the blank column and then selecting the level adding button 306 allows addition of a new level to the level of the highest order. In the decoration contents column 308, decoration items which can be performed for the object which is selected in the set object list box 304 are listed. The decoration items are displayed together with their respective check boxes. In the example shown in Fig. 14, a "text object" is selected, and "Bold", "Italic", "Underline", "Shading 1", "Shading 2", "Striping" are listed as decoration items. Depending on the contents of the decoration items, list boxes for allowing selection from options and text boxes for inputting numeric values are provided. In the editing preview column 309, a decoration image of the sample data which are decorated by the decoration items designated in the decoration contents column 308 is displayed.

In the example shown in Fig. 14, a "decorative" is selected as an editing and decoration list; a "text object" is selected as a set object; a "Level 3" is selected as an editing and decoration level; and "Bold" and "Italic" are filled in as decoration contents. In the editing preview column 309, sample data "AaBbCcDd" is displayed in a bolded and italic form.

When the decoration list adding and deleting button 302 is selected, a decoration list addition and deletion screen 400 such as shown in Fig. 15 is displayed. The decoration list addition and deletion screen 400 is formed with a decoration list guide column 401, a new creation button 402, a name change button 403, a deleting button 404, an import button 405, and an export button 406. In the decoration list guide column 401, all the decoration lists stored in the decoration list information storage area 231 are displayed. From these decoration lists, a decoration lists to be subjected to name change, deletion, and import can be selected. Selecting the new creation button 402 allows creation of a new decoration list. Selecting the name change button 403 allows change in the name of the decoration list selected in the decoration list guide column 401. Selecting the deleting button 404 allows deletion of the decoration list selected in the decoration list guide column 401. Further, selecting the import button 405 allows loading of a decoration list from the outside, and selecting the export button 406 allows output of the decoration list in the form which can be loaded at the outside.

Here, information to be used in the decoration processing and decoration list editing will be described with reference to Figs. 16 and 17. Fig. 16 is a schematic diagram showing a structure of a decoration processing information storage area 232 provided in a RAM 530. Fig. 17 is a schematic diagram showing a structure of a decoration list editing information storage area 233 provided in the RAM 530.

As shown in Fig. 16, the decoration processing information storage area 232 stores a selected decoration list, the number of lists, an all-level display flag, a selected level, information about the number of displayed images (in the vertical direction), information about the number of displayed images (in the lateral direction), a preview arranging position information, and data for decoration preview. The selected decoration list holds the name of the decoration list which is selected in the decoration list column 202 on the decoration screen 200. The number of lists holds the number of all the lists in the selected decoration list. The all-level display flag holds the state of all-level display check flag. When the flag is checked (ON), "1" is stored, whereas when the flag is not checked (OFF), "0" is stored. The selected level holds a value indicating the decoration level which is selected by the decoration level slider 204. The information about the number of displayed images (in the vertical direction) and the information about the number of displayed images (in the lateral direction) hold the numbers of displays selected in the vertical list box 206 and the lateral list box 207, respectively. The decoration preview arranging position information holds a position of arranging each decoration image when all the levels are displayed (the number of rows and the number of pieces from the leftmost side) for each decoration image. The data for decoration preview holds image data of each decoration image for each decoration image.

The example shown in Fig. 16 represents a value of the decoration processing information storage area 232 in the state of the decoration screen 200 shown in Fig. 12. In the selected decoration list, "decorative" is instructed; the number of lists is "9"; the all-level display flag is "1" indicating that the flag is ON; the selected level is "1"; the information about the number of displayed images (in the vertical direction) is "3"; the information about the number of displayed images (in the lateral direction) is "3"; the decoration preview arranging position information holds a coordinate value corresponding to nine decoration images, although its illustration is omitted in Fig. 16; and the data for decoration preview holds image data corresponding to nine decoration images, although its illustration is omitted in Fig. 16.

Specifically, as shown in Fig. 17, the decoration list editing information storage area 233 holds the selected decoration list for editing, the selected level for editing, the kind of set object, data for editing preview, and an addition and deletion decoration list. The selected decoration list for editing holds the name of decoration list which is selected in the editing and decoration list box 301 on the detail setting screen 300 for decoration lists. The selected level for editing holds the decoration level which is selected in the editing and decoration level column 305. The kind of set object holds the kind of object which is selected in the set object list box 304. The data for editing preview holds image data of the decoration image of the sample data which is displayed in the editing preview column 309. The addition and deletion decoration list holds the name of the decoration list which is selected in the decoration list guide column 401 on the decoration list addition and deletion screen 400.

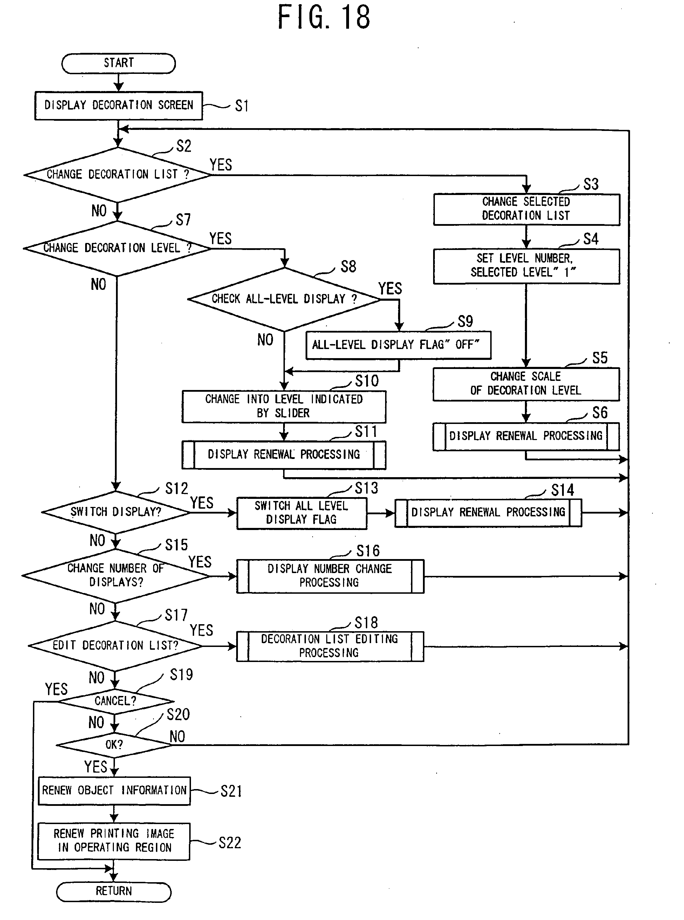

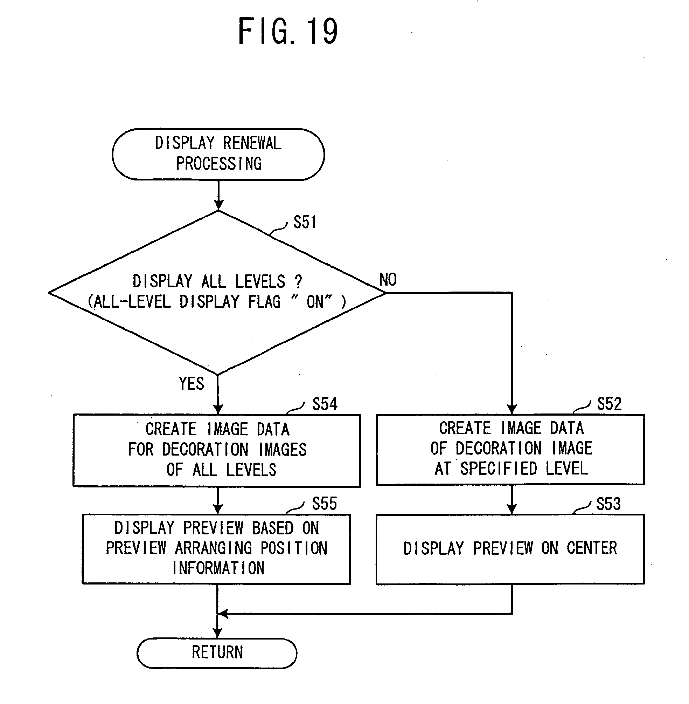

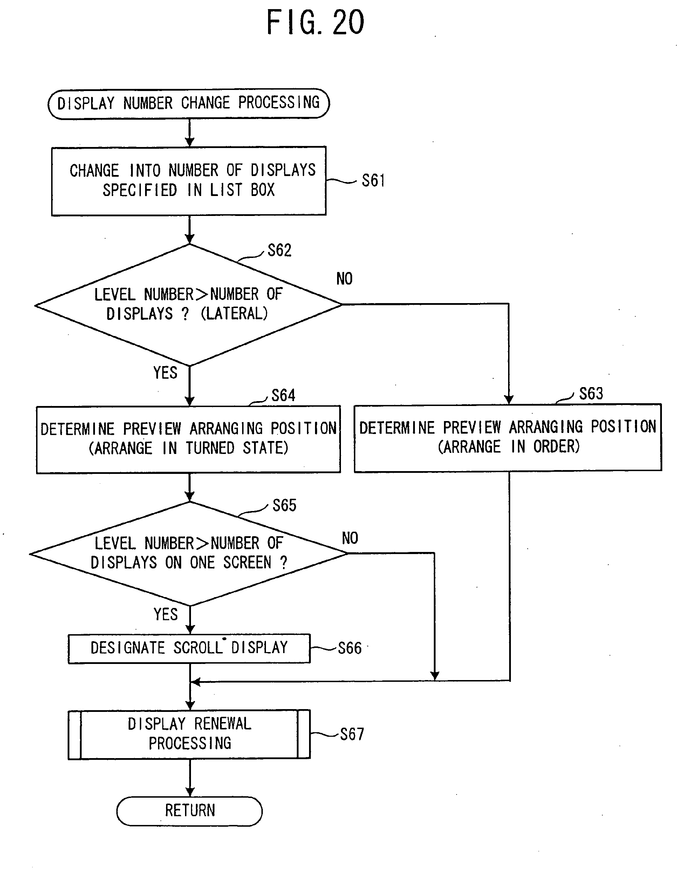

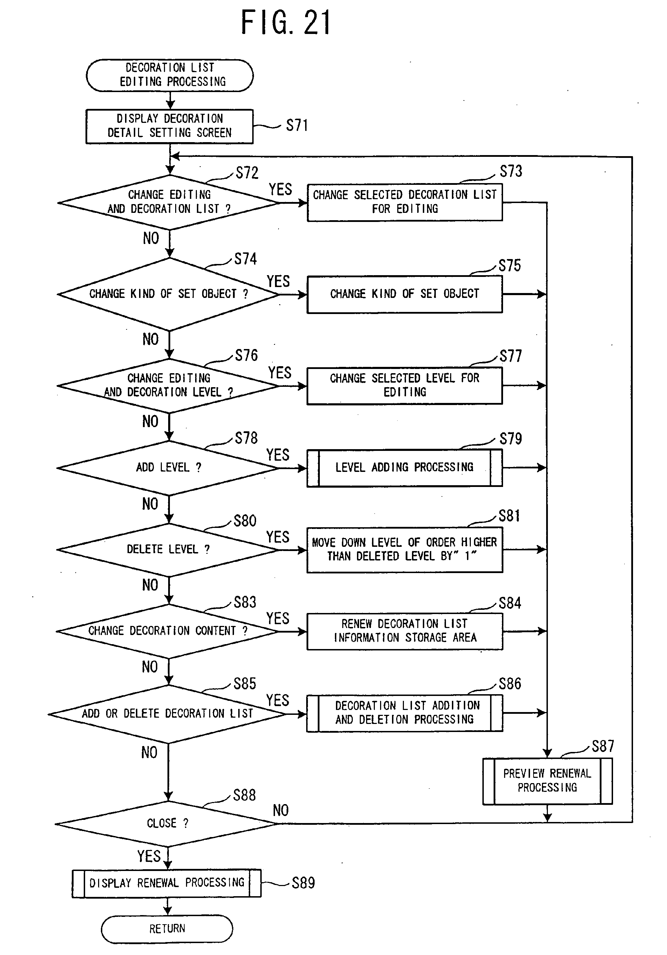

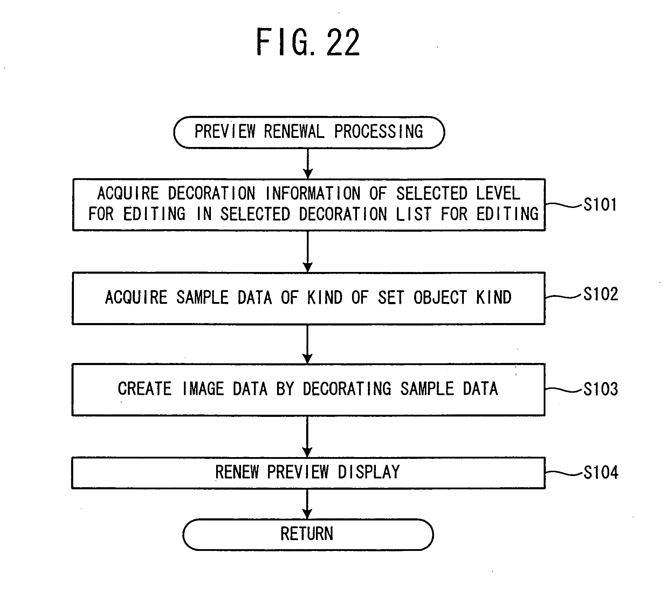

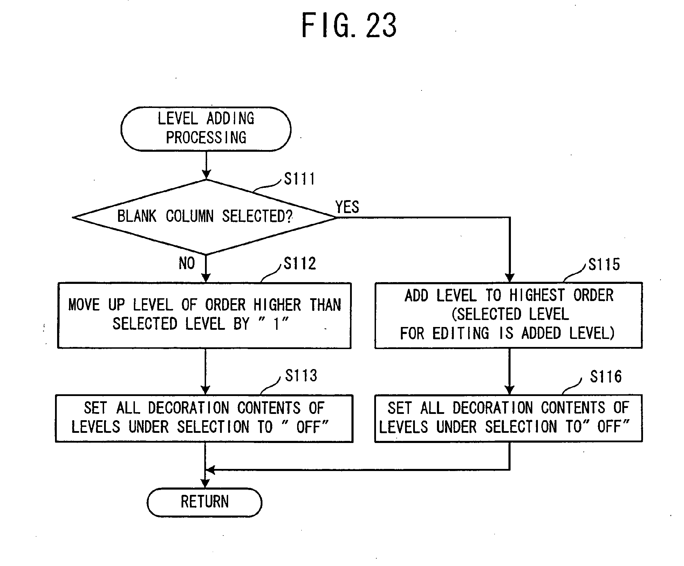

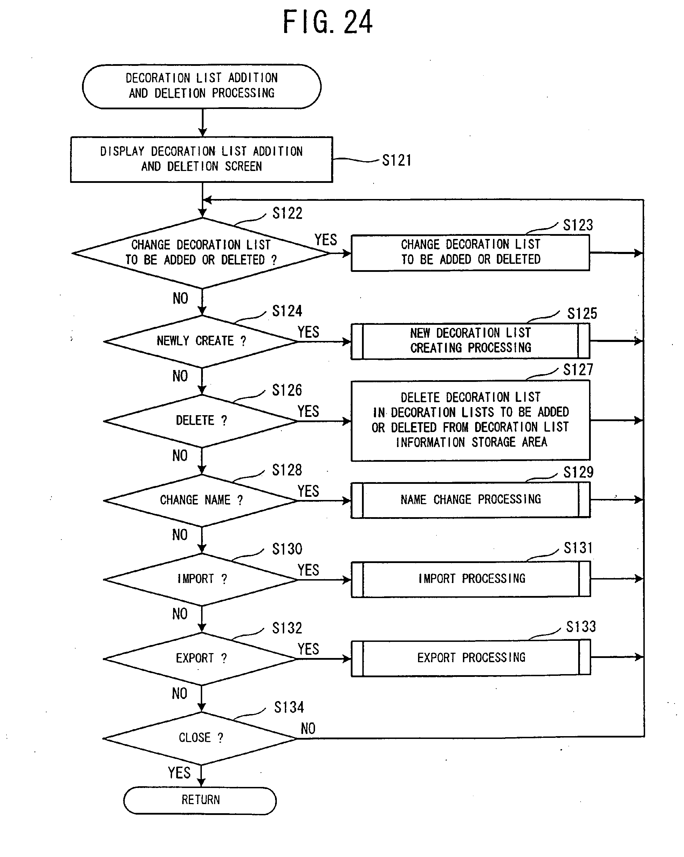

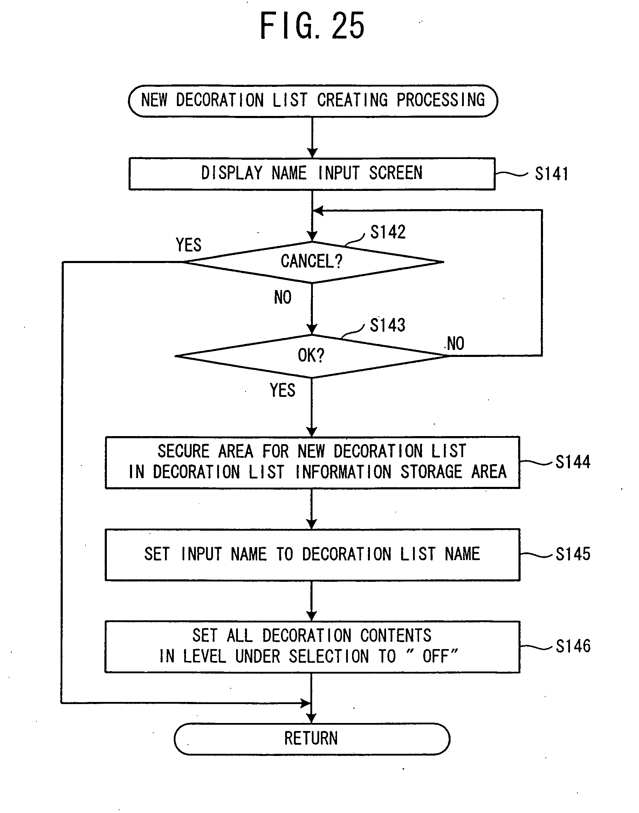

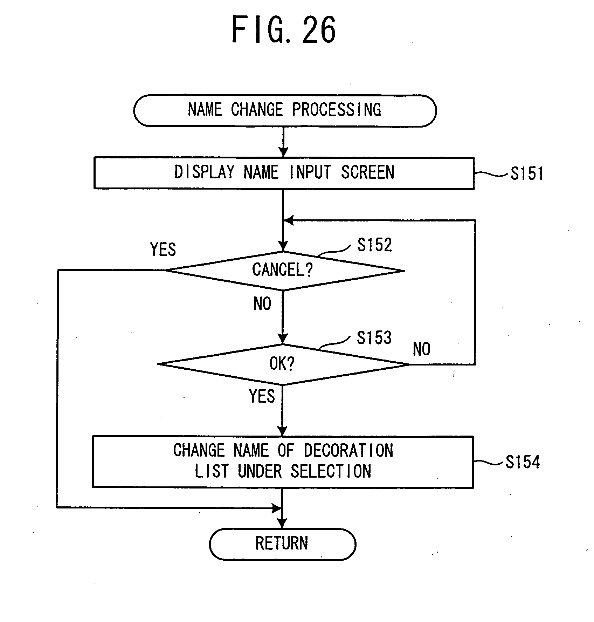

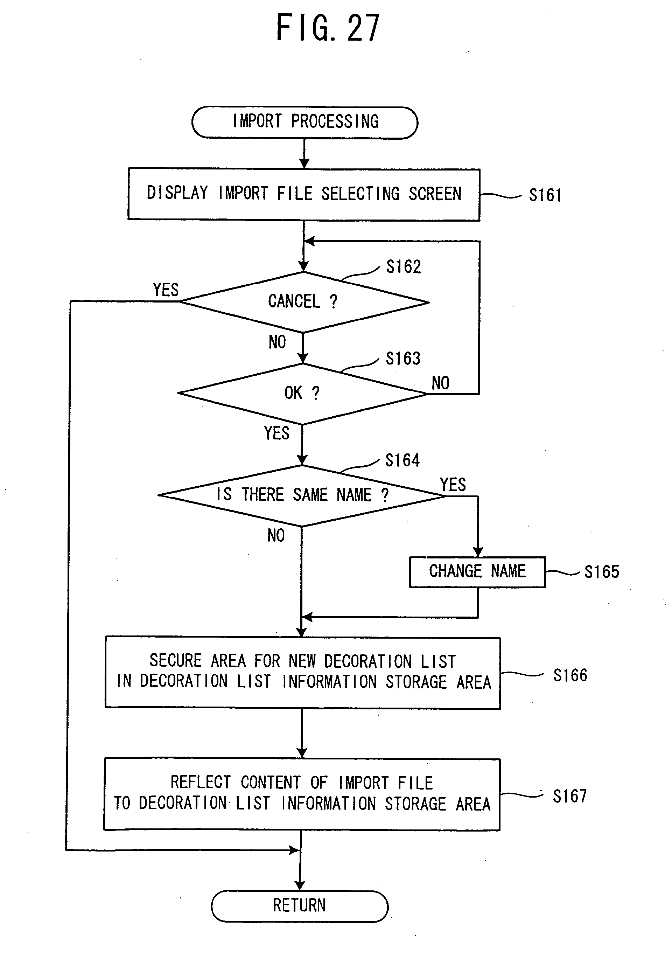

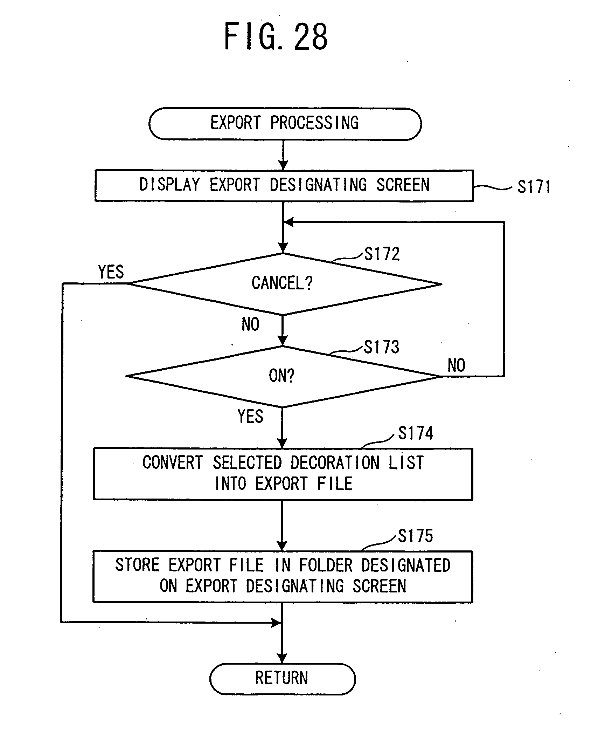

Next, a decoration processing for decorating decoration lists and editing processing of decoration lists will be described with reference to flowcharts of Figs. 18 to 26. Fig. 18 is a flowchart of a decoration processing. Fig. 19 is a flowchart of a display renewal processing to be performed in the decoration processing. Fig. 20 is a flowchart of a display number change processing to be performed in the decoration processing. Fig. 21 is a flowchart of a decoration lists edition processing to be performed in the decoration processing. Fig. 22 is a flowchart of a preview renewal processing to be performed in the decoration lists editing processing. Fig. 23 is a flowchart of a level addition processing to be performed in the decoration lists editing processing. Fig. 24 is a flowchart of a decoration lists addition and deletion processing to be performed in the decoration lists editing processing. Fig. 25 is a flowchart of a new list production processing to be performed in the decoration lists addition and deletion processing. Fig. 26 is a flowchart of a name change processing to be performed in the decoration lists addition and deletion processing. Fig. 27 is a flowchart of an import processing to be performed in the decoration lists addition and deletion processing. Fig. 28 is a flowchart of an export processing to be performed in the decoration lists addition and deletion processing.

When "decoration" is instructed in the editor 100, a decoration processing shown in Fig. 18 is initiated. First of all, a decoration screen 200 is displayed (S1). Then, when a decoration list column 202 is operated so as to change a decoration list (S2: YES), the value in the selected decoration list in the decoration processing information storage area 232 is changed (S3). Then, the number of the decoration levels stored in the decoration list information storage area 231 is set to the number of lists and the selected level is set to "1" (S4). Then, the scale of the decoration level slider 204 on the decoration screen 200 is changed in accordance with the number of lists and the level 1 is selected (S5). Then, a display renewal processing is performed where the decoration image in the preview column 201 is renewed into a decoration image at a level 1 of the selected decoration lists (S6, see Fig. 19). After that, the process returns to the step S2. The display renewal processing will be described later with reference to Fig. 19.

Further, when decoration level slider 204 is operated to change the decoration level (S7:YES), it is determined whether the all-level display check box 205 is ON (S8). If the all-level display flag is "ON" (S8: YES), the all-level display flag is set to "OFF" so that the all-level display is switched into a selected decoration level display (S9). If the all-level display flag is not "ON" (S8: NO), this state means that the selected decoration level display is already established, and therefore, no operation is made for the flag. Then, the level designated by the decoration level slider 204 is set to the selected level in the decoration processing information storage area 232 (S10). Then, the display renewal processing is performed, and the decoration image in the preview column 201 is renewed into the decoration image of the selected decoration level (S11, see Fig. 19). After that, the process returns to the step S2.

Further, when the all-level display check box 205 is operated to make a switch between the all-level display and the selected decoration level display (S12: YES), the all-level display flag is switched (S13). Specifically, if the all-level display flag is "ON", the flag is switched to "OFF" (S13). Contrarily, if the all-level display flag is "OFF", the flag is switched to "ON" (S13). Then, the display renewal processing is performed so as to renew the decoration image in the preview column 201 (S14, see Fig. 19). After that, the process returns to the step S2.

When the vertical list box 206 or the lateral list box 207 is operated to change the number of displayed images (S15: YES), a display number change processing shown in Fig. 20 is performed (S16). As shown in Fig. 20, first of all, the values designated in the vertical list box 206 or the lateral list box 207 is set to the information about the number of displayed images (in the vertical direction) and the information about the number of displayed images (in the lateral direction) in the decoration processing information storage area 232 (S61). Then it is determined whether the level number is larger than the information about the number of displayed images (in the lateral direction) (S62). If the level number is not larger than the information about the number of displayed images (in the lateral direction) (S62: NO), the decoration images can be arranged along one and the same line in a lateral direction in the preview column 201. Therefore, the level number is set to the decoration preview arranging position information in such a manner that the decoration images are arranged in the order starting from the decoration image of the lowest level located at the first row on the left side (S63). Then, a display renewal processing is performed so as to renew the decoration image in the preview column 201 (S67, see Fig. 19). After that, the display number change processing is finished and the process returns to the step S2 in the decoration processing.

If the number of levels is larger than the information about the number of displayed images (in the lateral direction) (S62: YES), it is necessary to display the decoration images in a state of being turned at some point. Therefore, the turning point at which the decoration images are turned is calculated and the resultant value is set to the decoration preview arranging position information (S64). Specifically, the number of rows is set to a value obtained by dividing the number of levels by the information about the number of displayed images (in the lateral direction) and then adding "1" to the quotient of the division. The number of pieces counted from the leftmost side is set to the remaining number of pieces (if the remaining number of pieces is "0", the number of pieces counted from the leftmost side is set to the value of the information about the number of displayed images (in the lateral direction)). For example, if the information of the number of displayed images (in the lateral direction) is "3" and the number of levels is "5", a mathematical relationship of "5÷3=1... 2" is established. Therefore, the turning point is arranged at the second point counted from the leftmost side in the second row.

Next, if the number of levels is larger than the number of displayed images on one screen (S65: YES), it is instructed to display the scroll bar 208 in the preview column 201 (S66). In response to this instruction, a display renewal processing is performed to renew the decoration image in the preview column 201 (S67, see Fig. 19). Then, the display number change processing is finished and the process returns to the step S2 in the decoration processing. The number of displayed images on one screen is obtained from a product of the value of information about the number of displayed images (in the vertical direction) and the value of information about the number of displayed images (in the lateral direction). If the number of levels is not larger than the number of displayed images on one screen (S65: NO), a display renewal processing is executed without instructing to display the scroll bar 208, and the decoration image in the preview column 201 is renewed (S67, see Fig. 19). Then, the display number change processing is finished and the process returns to the step S2 in the decoration processing.

In the decoration processing in Fig. 18, if the decoration list editing button 203 is selected to instruct to edit the decoration list (S17: YES), the decoration list editing processing shown in Fig. 21 is executed (S18). Then, the process returns to the step S2 in the decoration processing. The decoration list editing processing will be described later with reference to Figs. 21 to 28.

If nothing is instructed (S2: NO, S7: NO, S12: NO, S15: NO S17: NO, S19: NO, S20: NO), the process returns to the step S2, and the steps from S2 to S20 are repeated until the cancel button or OK button is selected (S19: YES or S20: YES). If the cancel button is selected (S19: YES), the decoration processing is finished and the decoration screen 200 is closed. If the OK button is selected (S20:YES), the selected decoration list and the decoration information of the selected level which are set in the decoration processing information storage area 232 are read from the decoration list information storage area 231, and each object and whole decoration information columns in the object information storage area 234 are renewed (S21). Then, the printing image in the operating region 150 is renewed in accordance with the renewal of the object information storage area 234 (S22). As such, a plurality of decoration items are decorated based on decoration contents of each decoration item at a designated level. At the same time, the decoration processing is finished and the decoration screen 200 is closed.

Next, the display renewal processing in the steps S6, S11, S14, S67 and S89 described later will be described with reference to the flowchart of Fig. 19. First of all, based on whether the all-level display flag is "ON" or "OFF", it is determined whether an all-level display is created (S51). If the all-level display flag is "ON" and the all-level display is created (S51: YES), image data for decoration image to be displayed in the preview column 201 is created for all the levels in the selected decoration list in the decoration processing information storage area 232 (S54). Then, based on the arranging position information stored in the decoration preview arranging position information, the decoration image of the created image data is displayed in the preview column 201 (S55). Then, the process returns to the step S2 in the decoration processing.

If the all-level display flag is "OFF" and an all-level display is not created (S51: NO), the display is of a selected decoration level. Therefore, image data of which individual objects are decorated or which is entirely decorated is created in accordance with the decoration information of the selected level in the selected decoration list in the decoration processing information storage area 232 (S52), and the decoration image of thus-created image data is displayed at the center of the preview column 201 (S53). Then, the process returns to the step S2 in the decoration processing. As such, the preview column 201 can display the printing image of the object that is decorated in accordance with decoration contents of the decoration information for at least one level of the decoration information included in a designated group decoration information when the level of the decoration information to be decorated is designated among the decoration information included in a designated group decoration information.

Next, a decoration list editing processing will be described with reference to the flowchart of Fig. 21. First of all, the detail setting screen 300 for decoration lists is displayed (S71). When the editing and decoration list box 301 is operated so as to change the editing and decoration list (S72: YES), the selected decoration list for editing in the decoration list editing information storage area 233 is replaced by the designated decoration list (S73). Then, the preview renewal processing for renewing the display in the editing preview column 309 is executed (S87, see Fig. 22), and the process returns to the step S72. The preview renewal processing will be described later with reference to Fig. 22.

When the set object list box 304 is operated so as to change the kind of set object (S74: YES), the kind of the set object in the decoration list editing information storage area 233 is replaced by the designated kind of object (S75). Then, the preview renewal processing for renewing the display in the editing preview column 309 is executed (S87, see Fig. 22), and the process returns to the step S72.

When the editing and decoration level column 305 is operated so as to change the editing and decoration level (S76: YES), the editing and decoration level in the decoration list editing information storage area 233 is replaced by the designated decoration level (S77). As such, the level of the decoration information included in the group decoration information is changed. Then, the preview renewal processing for renewing the display in the editing preview column 309 is executed (S87, see Fig. 22), and the process returns to the step S72.

When the level adding button 306 is selected so as to instruct to add a level (S78: YES), the level addition processing shown in Fig. 23 is executed (S79) in order to add group decoration information to the decoration list information storage area 231. As shown in Fig. 23, first of all, it is determined whether the blank column immediately below the column of the highest order is selected in the editing and decoration level column 305 (S111). If a blank column is selected (S111: YES), a level is added to a further higher order. As a result, a new level area is added to the highest order of the decoration list in the selected decoration list for editing in the decoration list information storage area 231 (S115). At this time, the selected level for editing is the added level of the highest order. Then, all the decoration contents of the level are set to "OFF" (S116). Then, the process returns to the decoration list editing processing of Fig. 21 where the preview renewal processing for renewing the display in the editing preview column 309 is executed (S87, see Fig. 22), and the process returns to the step S72.

When a blank column is not selected (S111: NO), the level of an order higher than the level which is selected now is moved up by "1" (S112). That is, a further higher level is added to the order of the highest order so as to be a further higher order, whereas the other levels are shifted to higher level by one. Since the selected level for editing becomes a newly added level, all the decoration contents are set to "OFF" (S113). Then, the process returns to the decoration list editing processing where the preview renewal processing for renewing the display in the editing preview column 309 is executed (S87, see Fig. 22). Then, the process returns to the step S72.

In the decoration list editing processing of Fig. 21, if the level deleting button 307 is selected so as to instruct to delete a level (S80: YES), the level of an order higher than the selected level for editing is moved down by "1" (S81). Specifically, the value of the decoration list in the selected level for editing in the decoration list information storage area 231 is cleared; the level of an order higher than the selected level for editing is shifted to a lower level by one; and the level of the highest order is deleted. As such, the decoration information included in the group decoration information is deleted. Then, the preview renewal processing for renewing the display in the editing preview column 309 is executed (S87, see Fig. 22), and the process returns to the step S72.

If the decoration contents column 308 is operated to change the decoration contents (S83: YES), the contents of the decoration item of the selected level for editing in the selected decoration list for editing in the decoration list information storage area 231 is replaced by the designated contents (S84). As such, the content of the group decoration information stored in the decoration list information storage area 231 is edited. Then, the preview renewal processing for renewing the display in the editing preview column 309 is executed (S87, see Fig. 22), and the process returns to the step S72.

If the decoration list adding and deleting button 302 is selected so as to instruct to add or delete the decoration list (S85: YES), the decoration list addition and deletion processing shown in Fig. 24 is executed (S86). Then, the preview renewal processing for renewing the display in the editing preview column 309 is executed (S87, see Fig. 22), and the process returns to the step S72. The decoration list addition and deletion processing will be described later with reference to Figs. 24 to 28.

If nothing is instructed (S72: NO, S74: NO, S76: NO, S78: NO, S80: NO, S83: NO, S85: NO, S88: NO), the process returns to the step S72. Then, the steps from S72 to S88 are repeated until the closure button is selected (S88: YES). When the closure button is selected (S88: YES), the detail setting screen 300 for decoration lists is closed. Then, the display renewal processing is executed (S89, see Fig. 19), and the process returns to the step S2 in the decoration processing.

Here, the preview renewal processing in S87 will be described with reference to the flowchart of Fig. 22. The decoration information acquisition of the selected level for editing in the selecting and decoration list for editing is acquired from the decoration list information storage area 231 (S101). Then, sample data of the set object kind is acquired from the program related information storage area of the HDD 250 (S102), and image data is created by decorating the sample data based on the decoration information acquired in the step S101 (S103). The image data is then displayed in the editing preview column 309 (S104). After that, the preview renewal processing is finished and the process returns to the step S72 in the decoration list editing processing.

Next, the decoration list addition and deletion processing in the step S86 will be described with reference to the flowcharts of Figs. 24 to 28. First of all, a decoration list addition and deletion screen 400 is displayed (S121). If the decoration list guide column 401 is operated so as to change the decoration list to be added or deleted (S122: YES), the decoration list to be added or deleted in the decoration list editing information storage area 233 is replaced by the designated decoration list (S123). Then, the process returns to the step S122.

If the new creation button 402 is selected so as to instruct to newly create a decoration list (S124: YES), a new decoration list creating processing shown in Fig. 25 is executed (S125) in order to add group decoration information to the decoration list information storage area 231. As shown in Fig. 25, first of all, a name input screen (not shown) is displayed (S141). The name input screen is provided with a text box for inputting a name therein, a cancel button, and an OK button. If the cancel button is selected (S142: YES), the name input screen is closed without executing any processing. Then, the new decoration list creating processing is finished and the process returns to the step S122 in the decoration list addition and deletion processing. Contrarily, if the OK button is selected (S143: YES), areas of new decoration lists for specified number of levels (for example, three levels) are secured in the decoration list information storage area 231 (S144). Then, the name input into the text box is set to the decoration list name (S145), and all the levels are set to "OFF" (S146). After that, the name input screen is closed, and the new decoration list creating processing is finished and the process returns to the step S122 in the decoration list addition and deletion processing. If neither the cancel button nor the OK button is selected (S142: NO, S143 : NO), the process returns to the step S142.

In the decoration list addition and deletion processing of Fig. 24, in which the group decoration information stored in the decoration list information storage area 231 is deleted, if the deletion button 404 is selected so as to instruct to delete the decoration list (S126: YES), a decoration list in the decoration lists to be added or deleted is deleted from the decoration list information storage area 231 (S127). Then, the process returns to the step S122.

If the name change button 403 is selected so as to instruct to change the name of the decoration list (S128: YES), the name change processing shown in Fig. 26 is executed (S129) in order to assign a name for identifying the group decoration information. As shown in Fig. 26, first of all, an name input screen (not shown) is displayed (S151). The name input screen is provided with a text box for inputting a name therein, a cancel button, and an OK button. If the cancel button is selected (S152: YES), the name input screen is closed without executing any processing. Then, the name change processing is finished and the process returns to the step S122 in the decoration list addition and deletion processing. Contrarily, if the OK button is selected (S153: YES), a decoration list name of the decoration name in the decoration lists to be added or deleted in the decoration list information storage area 231 is replaced by the name which is input into the text box (S154). After that, the name input screen is closed and the name change processing is finished, and the process returns to the step S122 in the decoration list addition and deletion processing. If neither the cancel button nor the OK button is selected (S152: NO, S153: NO), the process returns to the step S152.

In the decoration list addition and deletion processing in Fig. 24, if the import button 405 is selected so as to instruct to import the decoration list (S130: YES), an import processing shown in Fig. 27 is executed (S131) in order to allow the group decoration information stored in the decoration list information storage area 231 to be stored in an outside memory. As shown in Fig. 27, first of all, an import file selecting screen (not shown) is displayed (S161). The import file selecting screen is provided with a file selecting column, a cancel button, and an OK button. And the import file selecting screen can select an import file from the respective folders of the HDD in the personal computer 500 or folders of other computers opened to the network to which the personal computer 500 is connected. If the cancel button is selected (S162: YES), the import file selecting screen is closed without executing any processing. Then, the import processing is finished and the process returns to the step S122 in the decoration list addition and deletion processing.

Contrarily, if the OK button is selected (S163: YES), in the decoration list information storage area 231 it is determined whether a decoration list having the same decoration list name as the decoration list name of the selected import file exists (S164). If such a decoration list exists (S164: YES), the decoration list name of the file to be imported is changed (S165). In this embodiment, for example, "2" is provided to the end of the decoration list name. If files of the same names are further imported, continued numbers are provided by increasing the number by "1" such as "3", "4" and thereafter. Different names may be input by an operator. If there are no same names (S164: NO), there is no problem in the existing decoration list names as they are, and therefore, nothing is executed. Next, an area for a new decoration list is secured in the decoration list information storage area 231 (S166), and the contents of the import file is reflected into this area (S167). After that, the decoration import file selecting screen is closed, and then the import processing is finished and the process returns to the step S122 in the decoration list addition and deletion processing. If neither the cancel button nor the OK button is selected (S162: NO, S163: NO), the process returns to the step S162.

Further, in the decoration list addition and deletion processing in Fig. 24, if the export button 406 is selected so as to instruct to export the decoration list (S132: YES), the export processing shown in Fig. 28 is executed (S133) in order to allow the group decoration information stored in another memory other than the decoration list information storage area 231 or an outside memory. As shown in Fig. 28, an export designating screen (not shown) is displayed (S171). The export designating screen is provided with a decoration list selecting column on which the decoration list names of the decoration lists stored in the decoration list information storage area 231 are displayed and are selectable, a text box for inputting the file name of the export file therein, a cancel button, and an OK button. And the export designating screen can select a decoration list which is outputted to the respective folders of the HDD in the personal computer 500 or folders of other computers opened to the network to which the personal computer 500 is connected and is stored as an export file. If the cancel button is selected (S172: YES), the export designating screen is closed without executing any processing. Then, the export processing is finished and the process returns to the step S122 in the decoration list addition and deletion processing. Contrarily, if the OK button is selected (S173: YES), the decoration information of the selected decoration list is converted into an export file format in the decoration list information storage area 231 (S174). Subsequently, the export file of the name which is input into the text box is stored into the folder designated on the export designating screen (S175). Then, the export designating screen is closed, and the export processing is finished and the process returns to the step S122 in the decoration list addition and deletion processing. If neither the cancel button nor the OK button is selected (S172: NO, S173: NO), the process returns to the step S172.

In the decoration list addition and deletion processing in Fig. 24, if nothing is instructed (S122: NO, S124: NO, S126: NO, S128: NO, S130: NO, S132: NO, S134: NO), the process returns ao the step S122, and the steps of S122 to S133 are repeated the closure button is selected (S134: YES). When the closure button is selected (S134: YES), the decoration list addition and deletion screen is closed. Then, the decoration list addition and deletion processing is finished and the process returns to the decoration list editing processing in Fig. 21 where the preview renewal processing for renewing the display in the editing preview column 309 is executed (S87, see Fig. 22). Then, the process returns to the step S72.

In the manner as described above, the object displayed in the operating region 150 is decorated in accordance with the decoration lists. Further, decoration lists are changed, deleted, or added.

It is a matter of course that the printing data editing apparatus and printing data editing program are not limited to those of the foregoing embodiment, but various decorations may be made without departing from the gist of the disclosure. It is needless to say that the kind of the object to be treated in the decoration list is not limited to "text", "image", and "whole". For example, a "group" constituted by combining a plurality of kinds of objects into one piece or a "template" to be used as a form of the arrangement of objects, and the like are conceivable. In addition, the decoration items are not limited to those exemplified in Figs. 6 and 7, but various other decoration items may be set. For example, text may be decorated by making crosshatch or selecting a specific background, or by designating various decoration items such as kinds of sizes, color of letters, font, and graphical letters. Further, the various decoration items may be set for images such as shading off the outline, change in color tones, various sizes.
Further, various decoration items may be set for "whole" such as backgrounds, base patterns, and the like.

Further, the decoration list names are not limited to the names expressing the images after decorations. For example, a case is conceivable where name plates each carrying a name of department to which the employee belongs, his title, and his own name are created in a certain office. If it is desired to make different decorations for the respective employees' titles on the name plates, decoration levels equal to the number of titles are prepared. Then, a level 1 is assigned to an employee having no title, a level 2 is assigned to a senior staff, and a level 3 is assigned to an assistant manager. Further, the decoration list is assigned with a name such as "name plate" which clarifies the purpose of use.

In the foregoing embodiment, the decoration level is selected by use of the decoration level slider 204. However, the method for selecting the decoration level is not limited to that using the slider, but the decoration level may be selected by inputting a numeric value into a text box or may be selected from a list box.

The printing data editing apparatus and printing data editing program are applicable to a personal computer which edits printing data for executing printing on a printer, and are also applicable to a printer which produces printing data by itself.

As described above, in a printing data editing apparatus, a first memory can store decoration information that includes decoration contents for a plurality of decoration items to be made to at least one object to be printed as group decoration information, wherein the group decoration information comprises at least one piece of the decoration information and is assigned with relative levels; and a controller is capable of, or can execute: designating a level of the group decoration information that includes the at least one piece of the decoration information stored in the first memory; and decorating the plurality of decoration items based on decoration contents of each decoration item at a designated level. Therefore, one or more objects can be decorated by a plurality of decoration items at one time, and the decoration contents can be designated by selecting a level. With this arrangement, a level setting such that the object is increasingly emphasized in accordance with the increase in the levels is available.

Further, in the printing data editing apparatus, the first memory can store a plurality of pieces of the group decoration information and designates the group decoration information, and the controller is capable of, or can execute designating the level of the decoration information included in the group decoration information. With this arrangement, since a plurality of pieces of group decoration information assigned with relative levels are available, it becomes possible to have a plurality of classes of decorations for the object and to give relative levels to the decoration contents in the respective classes.

Further, in the printing data editing apparatus, the group decoration information can be stored in the first memory in a state where a name that identifies the group decoration information is assigned to the group decoration information. Therefore, the group decoration information can be managed by its name. Further, the group decoration information may be assigned with a name that facilitates for users to imagine a category of the group decoration information (for example, "decorative", "faint", "sharp") so that the group decoration information is displayed in a name that is easy for the user to identify.

Further, in the printing data editing apparatus, the controller is capable of, or can execute assigning a name for identifying the group decoration information. With this arrangement, it is possible to assign a name suitable for the decoration obtained from the group decoration information or to change the existing name into a name suitable for the decoration.

Further, in the printing data editing apparatus, the controller is capable of , or can execute designating the group decoration information by the name. With this arrangement, if a name that provides an image of the class of the group decoration information is assigned, this name will be an indicator at the time of selecting the decoration information. Therefore, it becomes easier for the users to designate the group decoration information than the case where the group decoration information is managed by a number, a symbol and the like.

Further, in the printing data editing apparatus, the controller is capable of, or can execute designating the level by inputting at least one of a value and a letter showing the level, by selecting at least one of the value and the letter showing the level, or by selecting the level by using a slider. With this arrangement, a level designation can be executed easily.

Further, in the printing data editing apparatus, a display can display a printing image of the object decorated in accordance with the decoration contents of each decoration item in the decoration information, wherein the controller is capable of controlling the display to display the printing image of the object that is decorated in accordance with decoration contents of the decoration information for at least one level of the decoration information included in a designated group decoration information when the level of the decoration information to be decorated is designated among the decoration information included in a designated group decoration information. With this arrangement, users can designate a level while seeing the image of the object after the decoration.

Further, in the printing data editing apparatus, the controller is capable of, or can execute controlling the display to display a plurality of printing images in an order of the levels. With this arrangement, since users can designate a level while seeing a printing image, the level can be easily selected.

Further, in the printing data editing apparatus, the controller is capable of, or can execute controlling the display to display the printing images in a plurality of rows turned at a certain point at the time of displaying the printing images in a number larger than a number that is displayable in one row, and to execute scroll display at a time of displaying the printing images in a number that exceeds a number of rows displayable on one screen when the rows are turned at some point. With this arrangement, a plurality of printing images can be displayed regardless of the screen size.

Further, in the printing data editing apparatus, the controller is capable of, or can execute setting the number of the printing images to be displayed on the display. With this arrangement, if it is desired to designate a level while comparing a plurality of levels, it is possible to display the printing images in the display number desired by the user, such as to increase the display number to display a large number of printing images or to decrease the display number to display only one printing image into a large size, and the like.

Further, in the printing data editing apparatus, the controller is capable of, or can execute: adding the group decoration information to the first memory; deleting the group decoration information stored in the first memory; and editing contents of the group decoration information stored in the first memory: wherein when the controller edits the contents of the group decoration information, the controller can (a) add the decoration information by designating the level in the group decoration information, (b) designate decoration contents of each decoration item in the decoration information included in the group decoration information, (c) change the level of the decoration information included in the group decoration information, and (d) delete the decoration information included in the group decoration information. With this arrangement, it is possible to edit the group decoration information by changing the decoration contents or levels of the decoration information, by adding a new level to the group decoration information to change it, by adding new group decoration information, and deleting group decoration information.

Further, in the printing data editing apparatus, a display can display a printing image of the object that is decorated in accordance with designated decoration contents. With this arrangement, the user can see the result of each object in a document under creation decorated by the designated decoration information as a printing image.

Further, in the printing data editing apparatus, the controller is capable of , or can execute allowing the group decoration information stored in the first memory to be stored into a memory in the printing data editing apparatus and a memory outside the printing data editing apparatus. With this arrangement, the group decoration information can be stored independently from the document under creation. Therefore, it is possible to deliver the group decoration information to other documents or other printing data editing apparatuses (so-called export).

Further, in the printing data editing apparatus, the controller is capable of, or can execute allowing the group decoration information stored in a second memory other than the first memory and a third memory outside the printing data editing apparatus to be stored in the first memory. With this arrangement, it is possible to capture the group decoration information that is created in other documents (so-called import).

Further, a printing data editing program stored on a computer-readable storage medium can have a routine that stores, in a first memory, decoration information that includes decoration contents for a plurality of decoration items to be made to at least one object to be printed as group decoration information, wherein the group decoration information comprises at least one piece of the decoration information and is assigned with relative levels; a routine that designates a level of the group decoration information that includes the at least one piece of the decoration information stored in a first memory; and a routine that decorates the plurality of decoration items based on decoration contents of each decoration item at a designated level.

Further, a printing data editing program stored on a computer-readable storage medium can have a routine that stores, in the first memory, a plurality of pieces of the group decoration information and designating the group decoration information; and a routine that is capable of designating the level of the decoration information included in the group decoration information.

Further, a printing data editing program stored on a computer-readable storage medium can have a routine that stores the group decoration information in the first memory in a state where a name that identifies the group decoration information is assigned to the group decoration information.

Further, a printing data editing program stored on a computer-readable storage medium can have a name assigned for identifying the group decoration information.

Further, a printing data editing program stored on a computer-readable storage medium can have the group decoration information designated by the name.

Further, a printing data editing program stored on a computer-readable storage medium can have the level designated by inputting at least one of a value and a letter showing the level, by selecting at least one of the value and the letter showing the level, or by selecting the level by using a slider.

Further, a printing data editing program stored on a computer-readable storage medium can have a routine that displays a printing image of the object decorated in accordance with the decoration contents of each decoration item in the decoration information on a display; and a routine that is capable of controlling the display to display the printing image of the object that is decorated in accordance with decoration contents of the decoration information for at least one level of the decoration information included in a designated group decoration information when the level of the decoration information to be decorated is designated among the decoration information included in a designated group decoration information.

Further, a printing data editing program stored on a computer-readable storage medium can display a plurality of printing images in an order of the levels.

Further, a printing data editing program stored on a computer-readable storage medium can display the printing images in a plurality of rows turned at a certain point at the time of displaying the printing images in a number larger than a number that is displayable in one row, and to execute scroll display at a time of displaying the printing images in a number that exceeds a number of rows displayable on one screen when the rows are turned at some point.

Further, a printing data editing program stored on a computer-readable storage medium can have the number of the printing images to be displayed on the display set.

Further, a printing data editing program stored on a computer-readable storage medium can have a routine that adds the group decoration information to the first memory; a routine that deletes the group decoration information stored in the first memory; and a routine that edits contents of the group decoration information stored in the first memory: wherein the contents of the group decoration information are edited in order to (a) add the decoration information by designating the level in the group decoration information, (b) designate decoration contents of each decoration item in the decoration information included in the group decoration information, (c) change the level of the decoration information included in the group decoration information, and (d) delete the decoration information included in the group decoration information.

Further, a printing data editing program stored on a computer-readable storage medium can have a routine that displays a printing image of the object that is decorated in accordance with designated decoration contents on a display.

Further, a printing data editing program stored on a computer-readable storage medium can have the group decoration information stored in the first memory stored into a memory in a printing data editing apparatus and a memory outside the printing data editing apparatus.

Further, a printing data editing program stored on a computer-readable storage medium can have the group decoration information stored in a second memory other than the first memory and a third memory outside a printing data editing apparatus stored in the first memory.

## Claims

1. A printing data editing apparatus (500), comprising:
a first memory (530) that stores decoration information (231, 232, 233, 234, 235) that includes decoration contents (2311, 2312) for a plurality of decoration items to be made to at least one object to be printed as group decoration information, wherein the group decoration information comprises at least one piece of the decoration information and is assigned with relative levels; and
a controller (510) for:
designating a level of the group decoration information that includes the at least one piece of the decoration information stored in the first memory (530); and
decorating the plurality of decoration items based on decoration contents of each decoration item at a designated level.

2. The printing data editing apparatus according to claim 1, wherein:
the first memory (530) stores a plurality of pieces of the group decoration information and designates the group decoration information, and
the controller (510) is for designating the level of the decoration information included in the group decoration information.

3. The printing data editing apparatus according to claim 1, wherein the group decoration information is stored in the first memory (530) in a state where a name that identifies the group decoration information is assigned to the group decoration information.

4. The printing data editing apparatus according to claim 3, wherein the controller (510) is for assigning a name for identifying the group decoration information.

5. The printing data editing apparatus according to claim 3, wherein the controller (510) is for designating the group decoration information by the name.

6. The printing data editing apparatus according to claim 1, wherein the controller is for designating the level by inputting at least one of a value and a letter showing the level, by selecting at least one of the value and the letter showing the level, or by selecting the level by using a slider.

7. The printing data editing apparatus according to claim 1, further comprising:
a display (100; 200) that displays a printing image (140; 210, 211, 221-229) of the object decorated in accordance with the decoration contents (2311, 2312) of each decoration item in the decoration information (231, 232, 233, 234, 235), wherein:
the controller is for controlling the display (100; 200) to display the printing image of the object that is decorated in accordance with decoration contents of the decoration information for at least one level of the decoration information included in a designated group decoration information when the level of the decoration information to be decorated is designated among the decoration information included in a designated group decoration information.

8. The printing data editing apparatus according to claim 7, wherein the controller is for controlling the display (200) to display a plurality of printing images (221-229; 221-224) in an order of the levels.

9. The printing data editing apparatus according to claim 7, wherein the controller is for controlling the display to display the printing images (221-224) in a plurality of rows turned at a certain point at the time of displaying the printing images in a number larger than a number that is displayable in one row, and for executing scroll display at a time of displaying the printing images (221-224) in a number that exceeds a number of rows displayable on one screen when the rows are turned at some point.

10. The printing data editing apparatus according to claim 7, wherein the controller is for setting the number of the printing images (221-229; 221-224) to be displayed on the display (200).

11. The printing data editing apparatus according to claim 1, wherein the controller is for executing:
adding the group decoration information to the first memory (530);
deleting the group decoration information stored in the first memory (530); and
editing contents of the group decoration information stored in the first memory (530):
wherein when the controller edits the contents of the group decoration information, the controller can (a) add the decoration information by designating the level in the group decoration information, (b) designate decoration contents of each decoration item in the decoration information included in the group decoration information, (c) change the level of the decoration information included in the group decoration information, and (d) delete the decoration information included in the group decoration information.

12. The printing data editing apparatus according to claim 11, further comprising a display that displays a printing image of the object that is decorated in accordance with designated decoration contents.

13. The printing data editing apparatus according to claim 1, wherein the controller is for allowing the group decoration information stored in the first memory (530) to be stored into a memory (550) in the printing data editing apparatus and/or a memory (541) outside the printing data editing apparatus.

14. The printing data editing apparatus according to claim 1, wherein the controller is for allowing the group decoration information stored in a second memory (550) other than the first memory (530) and a third memory (541) outside the printing data editing apparatus to be stored in the first memory (530).

15. A printing data editing program stored on a computer-readable storage medium (530; 541; 550), comprising:
a routine that stores, in a first memory (530), decoration information (231, 232, 233, 234, 235) that includes decoration contents (2311, 2312) for a plurality of decoration items to be made to at least one object to be printed as group decoration information, wherein the group decoration information comprises at least one piece of the decoration information and is assigned with relative levels;
a routine that designates a level of the group decoration information that includes the at least one piece of the decoration information stored in the first memory (530); and
a routine that decorates the plurality of decoration items based on decoration contents of each decoration item at a designated level.

16. The printing data editing program stored on a computer-readable storage medium according to claim 15, further comprising:
a routine that stores, in the first memory (530), a plurality of pieces of the group decoration information and designating the group decoration information; and
a routine that designates the level of the decoration information included in the group decoration information.

17. The printing data editing program stored on a computer-readable storage medium according to claim 15, further comprising a routine that stores the group decoration information in the first memory (530) in a state where a name that identifies the group decoration information is assigned to the group decoration information.

18. The printing data editing program stored on a computer-readable storage medium according to claim 17, wherein a name is capable of being assigned for identifying the group decoration information.

19. The printing data editing program stored on a computer-readable storage medium according to claim 17, wherein the group decoration information is capable of being designated by the name.

20. The printing data editing program stored on a computer-readable storage medium according to claim 15, wherein the level is capable of being designated by inputting at least one of a value and a letter showing the level, by selecting at least one of the value and the letter showing the level, or by selecting the level by using a slider.

21. The printing data editing program stored on a computer-readable storage medium according to claim 15, further comprising:
a routine that displays a printing image (140; 210, 211, 221-229) of the object decorated in accordance with the decoration contents (2311, 2312) of each decoration item in the decoration information (231, 232, 233, 234, 235) on a display (100; 200); and
a routine that controls the display (100; 200) to display the printing image of the object that is decorated in accordance with decoration contents of the decoration information for at least one level of the decoration information included in a designated group decoration information when the level of the decoration information to be decorated is designated among the decoration information included in a designated group decoration information.

22. The printing data editing program stored on a computer-readable storage medium according to claim 21, wherein the display controlling routine is for displaying a plurality of printing images (221-229; 221-224) in an order of the levels.

23. The printing data editing program stored on a computer-readable storage medium according to claim 21, wherein the display controlling routine is for displaying the printing images (221-224) in a plurality of rows turned at a certain point at the time of displaying the printing images in a number larger than a number that is displayable in one row, and for executing scroll display at a time of displaying the printing images (221-224) in a number that exceeds a number of rows displayable on one screen when the rows are turned at some point.

24. The printing data editing program stored on a computer-readable storage medium according to claim 21, wherein the number of the printing images to be displayed on the display is capable of being set.

25. The printing data editing program stored on a computer-readable storage medium according to claim 15, comprising:
a routine that adds the group decoration information to the first memory;
a routine that deletes the group decoration information stored in the first memory; and
a routine that edits contents of the group decoration information stored in the first memory:
wherein the contents of the group decoration information are edited in order to (a) add the decoration information by designating the level in the group decoration information, (b) designate decoration contents of each decoration item in the decoration information included in the group decoration information, (c) change the level of the decoration information included in the group decoration information, and (d) delete the decoration information included in the group decoration information.

26. The printing data editing program stored on a computer-readable storage medium according to claim 25, further comprising a routine that displays a printing image of the object that is decorated in accordance with designated decoration contents on a display.

27. The printing data editing program stored on a computer-readable storage medium according to claim 15, wherein the group decoration information stored in the first memory (530) is capable of being stored into a memory (550) in a printing data editing apparatus and/or a memory (541) outside the printing data editing apparatus.

28. The printing data editing program stored on a computer-readable storage medium according to claim 15, wherein the group decoration information stored in a second memory (550) other than the first memory (530) and a third memory (541) outside a printing data editing apparatus is capable of being stored in the first memory (530).
